# EUROPÄISCHE PATENTSCHRIFT

(11) **EP 2 788 791 B1**
(45) Veröffentlichungstag und Bekanntmachung des Hinweises auf die Patenterteilung: **07.11.2018**
(21) Anmeldenummer: 12798282.5
(22) Anmeldetag: 06.12.2012
(51) Int. Cl.: G01B 11/14, G01S 17/66

(54) **LASERTRACKER MIT POSITIONSSENSITIVEN DETEKTOREN ZUR SUCHE EINES ZIELS**
LASER TRACKER WITH POSITION-SENSITIVE DETECTORS FOR SEARCHING A TARGET
APPAREIL DE SUIVI LASER DOTÉ DE DÉTECTEURS SENSIBLES À LA POSITION POUR LA RECHERCHE D'UNE CIBLE

(30) Priorität: 06.12.2011 EP 11192216
(43) Veröffentlichungstag der Anmeldung: 15.10.2014
(73) Patentinhaber: Leica Geosystems AG, 9435 Heerbrugg (CH)
(72) Erfinder: MARKENDORF, Albert, CH-5046 Walde (CH)
(74) Vertreter: Kaminski Harmann
(86) Internationale Anmeldenummer: PCT/EP2012/074667
(87) Internationale Veröffentlichungsnummer: WO 2013/083707

(56) Entgegenhaltungen:
- EP-A1- 0 553 266
- EP-A2- 2 071 283
- WO-A1-2007/079600
- WO-A1-2010/148525
- US-A1- 2010 128 259
- US-A1- 2011 181 872
- US-A1- 2011 260 033
- HERNÂ'N BADINO ET AL: "Integrating LIDAR into Stereo for Fast and Improved Disparity Computation", 3D IMAGING, MODELING, PROCESSING, VISUALIZATION AND TRANSMISSION (3DIMPVT), 2011 INTERNATIONAL CONFERENCE ON, IEEE, 16. Mai 2011 (2011-05-16), Seiten 405-412, XP031896512, DOI: 10.1109/3DIMPVT.2011.58 ISBN: 978-1-61284-429-9
- POINT GREY RESEARCH: "Versatile digital camera", 20040420 , 20. April 2004 (2004-04-20), Seiten 1-3, XP007920361, Gefunden im Internet: URL:http://www.ptgrey.com/products/digiclo ps/Digiclops.pdf [gefunden am 2012-03-08]

## Beschreibung

Die Erfindung betrifft ein Koordinatenmessgerät, insbesondere einen Lasertracker, zur fortlaufenden Verfolgung eines reflektierenden Ziels und zur Positionsbestimmung des Ziels nach dem Oberbegriff des Anspruchs 1 bzw. 2 und ein Verfahren zum Suchen des Ziels nach Anspruch 10 bzw. 11.

Messvorrichtungen, die für eine fortlaufende Verfolgung eines Zielpunkts und eine koordinative Positionsbestimmung dieses Punkts ausgebildet sind, können allgemein, insbesondere im Zusammenhang mit der industriellen Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zur Messvorrichtung reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von der Messvorrichtung zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lage zueinander bekannt ist, kann auf eine Orientierung eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - als Lichtquellen HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder komplett zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 A1 bekannt. Weitere Lasertracker sind aus der EP2071283, US20110260033 und US20100128259 bekannt.

In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird. Aufgrund des Versatzes der durch den Sensor definierten optischen Sensorachse und der Achse entlang derer sich der Messlaserstrahl ausbreitet, kann das Ausrichten des Strahls auf das Ziel mittels der sensorbasierten Richtungsbestimmung zum Ziel und damit das Ankoppeln nicht in einem direkten Schritt erfolgen. Für ein feststehendes Ziel sind hierfür mehrere Iterationsschritte mit jeweils einem Messvorgang (erneute Bestimmung einer Richtung zum Ziel mit dem Sensor) zur Annäherung des Laserstrahls erforderlich. An einer derartigen Annäherungsmethode ist daher nachteilig, dass das Aufsuchen und Anzielen des Ziels ein zeitintensiver Vorgang (da iterativ) ist und das Aufsuchen, insbesondere bei einer Relativbewegung des Ziels zum Sensor, nicht robust und eindeutig ist. Des Weiteren kann bei einer Bewegung des Ziels relativ zum Lasertracker keine Annäherung des Laserstrahls zum Ziel mehr gelingen, da sich eine Abweichung zwischen dem mittels des Sensors detektierten Ziel und dem Laserstrahl dabei fortlaufend verändert. Eine iterative Annäherung des Strahls an das Ziel kann aufgrund dieser während der Bewegung des Ziels anhaltenden Abweichungsveränderung so nicht erfolgen. Jeder Iterationsschritt mit einem erneuten Erfassen eines Reflexes entspricht dabei einer ersten solchen Messung auf ein (neues) Ziel. Generell ergibt sich somit ein grosser Nachteil solcher Anzielsysteme dazu, dass feststehende Ziele nur mit einem relativ sehr grossen Zeitaufwand angezielt werden können und das direkte Anzielen bewegter Ziele unmöglich ist.

Es ist daher Aufgabe der vorliegenden Erfindung einen verbesserten Lasertracker mit einer Funktionalität zum präzisen und schnelleren Auffinden und insbesondere Anzielen eines Ziels bereitzustellen.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur fortlaufenden Verfolgung eines reflektierenden Ziels und zur Positionsbestimmung des Ziels. Der Tracker weist dabei eine Basis, die eine Stehachse definiert, und eine Strahllenkeinheit zur Emission einer Messstrahlung und zum Empfang von zumindest einem Teil der am Ziel reflektierten Messstrahlung auf, wobei die Strahllenkeinheit um die Stehachse und eine Neigungsachse relativ zur Basis motorisiert schwenkbar ist und durch eine Emissionsrichtung der Messstrahlung eine Messachse definiert ist. Ferner verfügt der Lasertracker über eine Feindistanzmesseinheit zur präzisen Distanzbestimmung zum Ziel vermittels der Messstrahlung, über eine Winkelmessfunktionalität zur Bestimmung einer Ausrichtung der Strahllenkeinheit relativ zur Basis und über eine Zielsucheinheit. Die Zielsucheinheit weist zudem Beleuchtungsmittel zur Beleuchtung des Ziels mit elektromagnetischer Beleuchtungsstrahlung, eine erste ein erstes Sichtfeld definierende Kamera mit einem ersten positionssensitiven Detektor und eine derart konfigurierte Steuerungs- und Auswerteeinheit auf, dass bei Ausführung einer Suchfunktionalität ein Auffinden des Ziels in Abhängigkeit von einer ersten Zielposition erfolgt. Hierbei ist mit der ersten Kamera ein erstes Bild erfassbar, im ersten Bild zumindest ein Teil der am Ziel reflektierten Beleuchtungsstrahlung als erste Zielposition bestimmbar, und die erste Kamera mit deren optischer Achse versetzt zur Messachse angeordnet.

Ausserdem verfügt die Zielsucheinheit über eine zweite ein zweites Sichtfeld definierende Kamera mit einem zweiten positionssensitiven Detektor, wobei mit der zweiten Kamera ein zweites Bild erfassbar ist und im zweiten Bild zumindest ein Teil der am Ziel reflektierten Beleuchtungsstrahlung als zweite Zielposition bestimmbar ist und die zweite Kamera mit relativ zur ersten Kamera bekannter und fixer Kamerapositionierung derart angeordnet ist, dass die Sichtfelder der ersten und zweiten Kamera zumindest teilweise überlappen und die zweite Kamera mit deren optischer Achse versetzt zur Messachse angeordnet ist. Weiters erfolgt bei Ausführung der Suchfunktionalität das Auffinden des Ziels in Abhängigkeit von einer Zusammenschau der ersten und zweiten Zielposition. Die beiden in den beiden Bildern bestimmten Zielpositionen werden gemeinsam dazu herangezogen das Ziel aufzufinden, d.h. das Ziel wird aus einer Kombination der Bildinformation des ersten und zweiten Bildes bestimmt, wobei die Informationen (Zielpositionen) der Bilder "verheiratet" werden und auf dieser Basis das Ziel aufgefunden wird.

In einer beispielhaften Ausführungsform eines erfindungsgemässen Lasertrackers kann mittels der beiden Kameras ein Ziel erfasst werden und das Ziel auf Basis der dabei erzeugten Bilder und der in den Bildern bestimmten Zielpositionen gefunden werden. Die Kameras weisen durch deren Anordnung am Tracker dabei ein gemeinsames, überlappendes Sichtfeld zum Erfassen des Ziels auf. Somit kann anhand einer Zusammenschau der Bilder das Ziel gefunden und lokalisiert werden. Das Erfassen der Bilder kann - insbesondere während einer Schwenkbewegung der Strahllenkeinheit - fortlaufend erfolgen, wobei eine Bildauswertung, z.B. mittels Bildverarbeitung, hinsichtlich einer Bewertung von erfassten Zielen, d.h. ob ein reflektierendes Ziel im Bild erfasst ist, erfolgt. Wird ein derartiges Ziel erkannt, so kann die Strahllenkeinheit so ausgerichtet werden, dass dieses im Überlappungsbereich der beiden Sichtfelder der Kameras mit beiden Kameras erfasst und im Rahmen des Zielsuchvorgangs gefunden werden kann.

Im Gegensatz zu Methoden der Zielsuche des Standes der Technik kann die Steuerungs- und Auswerteeinheit dabei erfindungsgemäss derart konfiguriert sein, dass bei Ausführung der Suchfunktionalität Vieldeutigkeiten, die bei einer Heranziehung von nur der ersten Zielposition, welche mittels der ersten Kamera bestimmt wurde, zum Auffinden des Ziels und durch eine durch die Messrichtung und die und die optischen Achsen der ersten und zweiten Kamera gegebene Parallaxe vorhanden sind, durch eine gemeinsame Heranziehung von sowohl der ersten als auch der zweiten Zielposition zum Auffinden des Ziels aufgelöst werden.

Bei der Verwendung von nur einer Kamera zur Suche des Ziels und einem Versatz der optischen Achse der Kamera relativ zur Messachse der Messstrahlung kann das Ziel mittels der Kamera nicht eindeutig lokalisiert werden, da aus einem Bild so nur eine Richtungsinformation ableitbar ist, jedoch keine Entfernung zum Ziel und somit keine Position des Ziels bestimmbar ist. Ein Ausrichten des Messstrahls auf das Ziel ist somit nicht direkt, d.h. in einem Schritt, möglich. Ein Vorteil der erfindungsgemässen Heranziehung der Bild- und Zielpositionsinformationen zweier in einem bekannten Verhältnis positionierter Kameras ist, dass das Ziel direkt gefunden werden kann und kein iteratives Annähern an das Ziel durchgeführt werden muss sondern das Anzielen direkt erfolgen kann.

Zum Auffinden des Ziels kann die Steuerungs- und Auswerteeinheit erfindungsgemäss derart konfiguriert sein, dass bei Ausführung der Suchfunktionalität in Abhängigkeit von der ersten und zweiten Zielposition eine Grobentfernung zum Ziel bestimmt wird.

Durch die bekannte relative Positionierung der Kameras (bekannte photogrammetrische Basis) und den bekannten Versatz der Kameras relativ zur Messachse kann anhand allgemein bekannter Prinzipien der Stereophotogrammetrie eine Entfernung zum Ziel, an dem die Beleuchtungsstrahlung reflektiert wird, auf Basis der im Bild erfassten Reflexionen am Ziel bestimmt bzw. berechnet werden.

Im Speziellen kann in diesem Zusammenhang erfindungsgemäss die Steuerungs- und Auswerteeinheit derart konfiguriert sein, dass bei Ausführung der Suchfunktionalität in Abhängigkeit von der ersten und zweiten Zielposition jeweils eine Zielrichtung zum Ziel abgeleitet und eine Grobposition in Abhängigkeit von den Zielrichtungen bestimmt wird, insbesondere mittels Photogrammetrie.

Wird zusätzlich zu einer bestimmten Entfernung zum Ziel eine Richtungsinformation zum Ziel berücksichtigt, so kann mit den erfassten Bildern der Kameras eine grobe Position des Ziels berechnet werden. Hierfür können jeweils Richtungen aus den in den Bildern erfassten Zielpositionen abgeleitet und mit den Entfernungsinformationen verknüpft werden.

Gemäss einer weiteren erfindungsgemässen Ausführungsform sind die erste und zweite Kamera in bekannter Positionierung und Ausrichtung relativ zueinander und relativ zur Messachse angeordnet, so dass durch die Positionen der ersten und zweiten Kamera eine photogrammetrische Basis mit bekannter Basislänge definiert ist.

Ein weiterer Aspekt der Erfindung betrifft die Positionierung der Kameras am Lasertracker. Erfindungsgemäss können die Kameras und die Messachse derart zueinander angeordnet sein, dass die Messachse zumindest teilweise in einem durch die überlappenden Sichtfelder der ersten und zweiten Kamera definierten Überlappungsbereich liegt. Hierdurch kann eine Erfassung des Ziels mit den beiden Kameras und eine Hinführen des Messlaserstrahls auf das Ziel realisiert werden. Insbesondere bei der Anzielung bewegter Ziele ist eine solche Überscheidung der Messachse mit dem Überlappungsbereich im Rahmen des Anzielprozesses vorteilhaft.

Erfindungsgemäss können die erste und zweite Kamera dabei derart angeordnet sein, dass deren optische Achsen jeweils parallel versetzt oder in einem definierten Winkel relativ zur Messachse angeordnet sind.

In speziellen Ausführungsformen ist somit ein (gewinkelter) Versatz der optischen Achsen relativ zur Messachse in der Art realisierbar, dass die optischen Achsen jeweils zur Messachse "hinschielen" oder von dieser "wegschielen", folglich nicht parallel zur Messachse verlaufen. Eine solche Anordnung kann beispielsweise für das Erzeugen eines relativ grossen Überlappungsbereichs der Sichtfelder oder um ein möglichst grosses Gesamtsichtfeld zu generieren vorgesehen sein.

Generell sind die im Zusammenhang mit der vorliegenden Erfindung genannten Kameras mit positionssensitiven Detektoren derart ausgebildet, dass deren Sichtfelder relativ zur Messstrahlung bzw. zum Öffnungswinkel der Messstrahlung gross sind, d.h. die Sichtfelder sind grösser als der Öffnungswinkel des Strahls, um einen verhältnismässig grossen Bereich einer Messumgebung mit potentiellen Zielen zu erfassen.

Im Gegensatz zu diesen Kameras weist ein anderer Typ von positionssensitivem Detektor (PSD), welcher beispielsweise in der Teleskopeinheit eines Lasertrackers verbaut ist und zur Feinanzielung und Verfolgung eines Ziels dient, einen engen Sichtbereich auf. Diese PSD ist derart angeordnet, dass sie die am Ziel reflektierte Messstrahlung detektieren kann und auf Basis dieser Detektion eine Ablage der erfassten Strahlung von einem Sollwert ermittelbar macht (die PSD ist also an den Messstrahlengang gekoppelt). In Abhängigkeit dieser Ablage kann dann eine Abweichung des Messlaserstrahls vom Zentrum eines Retroreflektors bestimmt werden und diese Strahlung so neu ausgerichtet werden, dass der Strahl zentral auf den Reflektor trifft. Im Weiteren ist ein derartiger Detektor nicht zur Erfassung eines Bildes im Sinne der Erfindung geeignet, da allein der retro-reflektierte Laserstrahl detektiert und dessen Position ausgewertet wird.

Neben dem parallelen Versatz der optischen Achsen oder einer definierten gewinkelten Anordnung (schielend) der optischen Achsen relativ zur Messachse können die erste und zweite Kamera erfindungsgemäss achsensymmetrisch relativ zur Messachse angeordnet sind. In diesem Zusammenhang können z.B. zwei Kameras an einer gemeinsamen Seite des Lasertrackers so angeordnet sein, dass eine Verbindungslinie zwischen den beiden Kameras die Messachse schneidet und die Strecke zwischen der Messachse und der ersten Kamera im Wesentlichen identisch mit der Strecke zwischen der Messachse und der zweiten Kamera ist.

In speziellen Ausführungsformen kann der Lasertracker erfindungsgemäss eine dritte oder mehrere Kameras mit einem dritten oder mehreren positionssensitiven Detektoren zur Erfassung einer dritten oder mehreren Zielpositionen aufweisen. Die dritte oder mehreren Kameras können derart angeordnet sein, dass eine dritte oder mehrere optische Achsen der dritten oder mehreren Kameras versetzt zur Messachse angeordnet sind. Die Steuerungs- und Auswerteeinheit kann dabei derart konfiguriert sein, dass bei Ausführung der Suchfunktionalität das Suchen des Ziels in Abhängigkeit von den drei oder mehreren Zielpositionen erfolgt, insbesondere wobei zumindest eine der Kameras zur Erfassung elektromagnetischer Strahlung in einem definierten Bereich um eine Beleuchtungswellenlänge der Beleuchtungsstrahlung ausgebildet ist.

Derartige Ausführungen können beispielsweise hinsichtlich einer Redundanz der Suchfunktionalität, z.B. bei Ausfall einer oder mehrerer Kameras, oder zur Steigerung der Genauigkeit bei der Ziellokalisierung realisiert sein.

Hinsichtlich des Anzielen des Ziels (z.B. nachfolgend auf das Auffinden des Ziels) mittels der Messstrahlung kann die Strahllenkeinheit erfindungsgemäss vermittels der Steuerungs- und Abzieleinheit derart steuerbar sein, dass die Messstrahlung in Abhängigkeit von der ersten und zweiten Zielposition ausgerichtet wird, insbesondere automatisch, insbesondere in Abhängigkeit von der Grobposition des Ziels, sodass die Messstrahlung auf das Ziel trifft und mittels der Feindistanzmesseinheit die Distanz zum Ziel präzise bestimmbar ist.

Durch das Auffinden des Ziels mittels der beschriebenen Suchfunktionalität kann die Messstrahlung direkt auf das Ziel ausgerichtet, an diesem zurück reflektiert und die Entfernung zum Ziels exakt bestimmt werden. Zur Entfernungsmessung können hierfür sowohl eine Absolutdistanzmesseinheit und ein Interferometer im Tracker angeordnet sein, wobei für beide Messeinheiten jeweils eine Strahlquelle vorgesehen sein kann und die emittierten Strahlungen sich entlang eines gemeinsamen Messpfads und schliesslich auf einer gemeinsamen Messachse ausbreiten können.

Das Ausrichten der Messstrahlung erfolgt in zwei Achsen (Stehachse bzw. vertikale Achse und Neigungsachse bzw. Kippachse) mittels an dem Lasertracker zum Schwenken der Strahllenkeinheit vorgesehenen Motoren, insbesondere Stellmotoren, wobei diese vermittels der Steuerungs- und Abzieleinheit ansteuerbar sein können.

Ein weiterer Aspekt der Erfindung betrifft die strukturelle Ausgestaltung des Lasertrackers. Erfindungsgemässe kann der Lasertracker eine um die Stehachse relativ zur Basis motorisiert schwenkbare und die Neigungsachse bzw. eine horizontale oder liegende Achse definierende Stütze und eine als Strahllenkeinheit ausgebildete, um die Neigungsachse relativ zur Stütze motorisiert schwenkbare Anzieleinheit mit einer Teleskopeinheit zur Emission der Messstrahlung und zum Empfang von zumindest einem Teil der am Ziel reflektierten Messstrahlung aufweisen.

Gemäss einer speziellen Ausführungsform der Erfindung sind die Beleuchtungsmittel des Lasertrackers derart ausgebildet, dass die elektromagnetische Beleuchtungsstrahlung divergent mit einer Wellenlänge im infraroten Bereich emittierbar ist.

Ausserdem sind gemäss einer weiteren Ausführungsform die erste und zweite Kamera derart ausgebildet, dass im Wesentlichen nur infrarote Beleuchtungsstrahlung erfassbar ist, insbesondere wobei die erste und zweite Kamera jeweils eine Filtereinheit zur im Wesentlichen ausschliesslichen Transmission der infraroten Strahlung auf den jeweiligen positionssensitiven Detektor aufweisen.

Ferner betrifft die Erfindung ein Verfahren zum Suchen eines Ziels mit einem Lasertracker, wobei der Lasertracker eine eine Stehachse definierende Basis und eine Strahllenkeinheit zum Emittieren einer Messstrahlung und zum Empfangen von zumindest einem Teil der am Ziel reflektierten Messstrahlung aufweist, wobei die Strahllenkeinheit um die Stehachse und eine Neigungsachse relativ zur Basis motorisiert schwenkbar ist und durch eine Emissionsrichtung der Messstrahlung eine Messachse definiert ist. Weiters erfolgt ein Beleuchten des Ziels mit elektromagnetischer Beleuchtungsstrahlung und ein positionssensitives Erfassen eines ersten Bildes mit einer ersten am Lasertracker angeordneten und ein erstes Sichtfeld definierenden Kamera, wobei die erste Kamera mit deren optischer Achse versetzt zur Messachse angeordnet ist. Zudem erfolgt ein erstes Bestimmen von zumindest einem Teil der am Ziel reflektierten Beleuchtungsstrahlung als erste Zielposition im ersten Bild.

Im Rahmen des Verfahrens erfolgt ausserdem ein positionssensitives Erfassen eines zweiten Bildes mit einer zweiten am Lasertracker angeordneten und ein zweites Sichtfeld definierenden Kamera und ein zweites Bestimmen von zumindest einem Teil der am Ziel reflektierten Beleuchtungsstrahlung als zweite Zielposition im zweiten Bild. Die zweite Kamera ist dabei mit relativ zur ersten Kamera bekannter und fixer Kamerapositionierung derart angeordnet ist, dass die Sichtfelder der ersten und zweiten Kamera zumindest teilweise überlappen und die zweite Kamera mit deren optischer Achse versetzt zur Messachse angeordnet ist. Ein Auffinden des Ziels erfolgt in Abhängigkeit von der ersten und zweiten Zielposition.

Das erfindungsgemässe Verfahren kann gemäss den abhängigen Ansprüchen 16-21 sowie gemäss den oben beschriebenen Ausführungsformen und Weiterbildungen des erfindungsgemässen Lasertrackers, insbesondere in analoger Weise, weitergebildet werden.

Insbesondere können Vieldeutigkeiten, die bei einem Heranziehen von nur der ersten Zielposition zum Auffinden des Ziels und durch eine durch die Messachse und die optischen Achsen der ersten und der zweiten Kamera gegebene Parallaxe vorhanden sind, durch ein gemeinsames Heranziehen von sowohl der ersten als auch der zweiten Zielposition aufgelöst werden.

Ferner kann in Abhängigkeit von der ersten und zweiten Zielposition eine Grobentfernung zum Ziel bestimmt werden. Ausserdem kann in Abhängigkeit von der ersten und zweiten Zielposition jeweils eine Zielrichtung zum Ziel abgeleitet und in Abhängigkeit von den Zielrichtungen eine Grobposition des Ziels bestimmt werden, insbesondere mittels Photogrammetrie.

Hinsichtlich des Ausrichtens der Messstrahlung kann die Strahllenkeinheit in Abhängigkeit von der ersten und zweiten Zielposition ausgerichtet werden, insbesondere automatisch, insbesondere in Abhängigkeit der Grobposition des Ziels, sodass die Messstrahlung auf das Ziel trifft und mittels der Feindistanzmesseinheit die Distanz zum Ziel präzise bestimmbar ist.

Insbesondere kann zumindest ein positionssensitives Erfassen derart erfolgen, dass ausschliesslich elektromagnetische Strahlung in einem definierten Bereich um eine Beleuchtungswellenlänge der Beleuchtungsstrahlung erfasst wird.

Gemäss einer bestimmten erfindungsgemässen Ausführungsform wird eine bekannte Positionierung und Ausrichtung der ersten und zweiten Kamera relativ zueinander und relativ zur Messachse bestimmt, insbesondere wobei das Ziel in verschiedenen Positionen bereitgestellt und mittels der Messstrahlung angezielt und vermessen wird, für jede Position des Ziels die erste und zweite Zielposition bestimmt wird und aus dem Vermessen des Ziels und den dazu bestimmten Zielpositionen die relative Positionierung und Ausrichtung abgeleitet wird.

Ausserdem wird gemäss einer weiteren Ausführung der Erfindung die erste und die zweite Zielposition erfindungsgemäss insbesondere im ersten und zweiten Bild mittels Bildverarbeiten derart bestimmt, dass durch die jeweilige Zielposition eine Lage im Bild einer im jeweiligen Bild erfassten Beleuchtungsstrahlungsquerschnittsform repräsentiert wird. Insbesondere erfolgt das Bestimmen der ersten und die zweiten Zielposition mittels Schwerpunktberechnen basierend auf der im jeweiligen Bild erfassten Beleuchtungsstrahlungsquerschnittsform, insbesondere mittels Helligkeits- und/oder Kontrastanalyse, und/oder mittels Matchen, insbesondere In-Übereinstimmung-Bringen, der im jeweiligen Bild erfassten Beleuchtungsstrahlungsquerschnittsform mit einem gespeicherten Muster anhand einer Best-Fit-Methode - dies insbesondere mit Subbildpunktgenauigkeit, wobei anhand der in Übereinstimmung gebrachten Lage des Musters im Bild die jeweilige Zielposition der im Bild erfassten Beleuchtungsstrahlung bestimmt wird, insbesondere mit Subbildpunktgenauigkeit. Insbesondere ist hierbei für das gespeicherte Muster eine Information mitgespeichert, die eine musterintern definierte, für die letztendliche Ermittlung der Zielposition heranzuziehende Muster-Position innerhalb des Musters ableiten lässt, im Speziellen wobei die Information die musterintern definierte Muster-Position selbst ist oder ein definierter Muster-Positions-Bestimmungsalgorithmus wie etwa ein Musterschwerpunkt-Bestimmungsalgorithmus.

Die Erfindung betrifft des Weiteren ein Computerprogrammprodukt mit Programmcode, der auf einem maschinenlesbaren Träger gespeichert ist, zur Steuerung bzw. Durchführung des erfindungsgemässen Verfahrens.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: zwei Ausführungsformen für erfindungsgemässe Lasertracker und ein Messhilfsinstrument;
- Fig.2: eine weitere Ausführungsform eines erfindungsgemässen Lasertrackers;
- Fig.3a-d: vier weitere erfindungsgemässe Ausführungsformen einer Anzieleinheit eines erfindungsgemässen Lasertrackers;
- Fig.4: eine erste Ausführungsform eines optischen Aufbaus eines erfindungsgemässen Lasertrackers;
- Fig.5a-b: zwei positionssensitive Detektoren mit erfassten Zielpositionen und ein erfindungsgemässes Auffinden des Ziels;
- Fig.6: einen geometrischen Ansatz für eine Methode zum Auffinden des Ziels;
- Fig.7a-c: ein mit einer Kamera eines erfindungsgemässen Lasertrackers mit einem positionssensitiven Detektor erfasstes Bild und eine Methode zur Bestimmung der jeweiligen Zielposition; und
- Fig.8: eine erfindungsgemässe Methode zur Kalibrierung von Position und Ausrichtung von zumindest zwei Kameras eines erfindungsgemässen Lasertrackers.

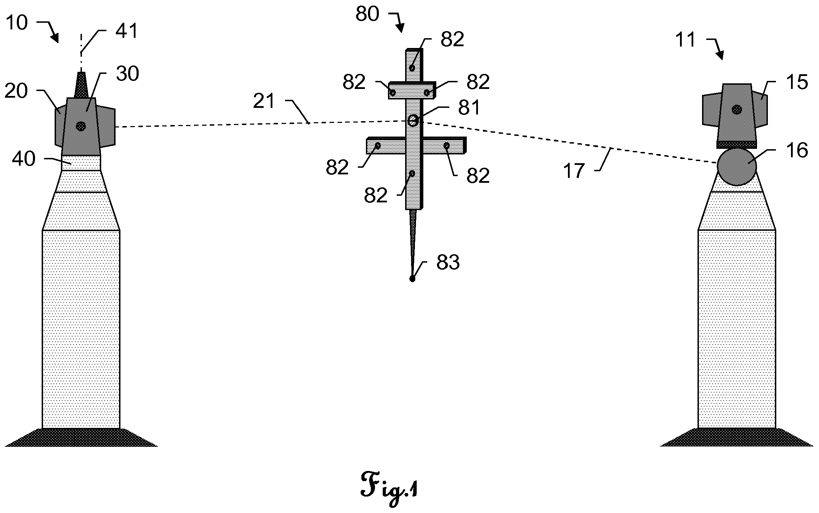

Figur 1 zeigt zwei Ausführungsformen für erfindungsgemässe Lasertracker 10,11 und ein Messhilfsinstrument 80, z.B. ein taktiles Messgerät. Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 derart an der Stütze 30 angeordnet, dass die Anzieleinheit 20 relativ zur Stütze 30 um eine Neigungsachse (Transitachse) schwenkbar ist. Durch eine so um zwei Achsen bereitgestellte Ausrichtungsmöglichkeit der Anzieleinheit 20 kann ein von dieser Einheit 20 emittierter Laserstrahl 21 flexibel ausgerichtet und damit Ziele angezielt werden. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 21 auf eine Reflektor 81 am Messhilfsinstrument 80 gerichtet und wird an diesem zurück zum Lasertracker 10 retro-reflektiert. Mittels dieses Messlaserstrahls 21 kann eine Entfernung zum Reflektor 81, insbesondere mittels Laufzeitmessung, mittels des Phasenmessprinzips oder mittels des Fizeau-Prinzips, bestimmt werden. Der Lasertracker 10 verfügt über eine Feindistanzmesseinheit zur Bestimmung dieser Entfernung zwischen dem Tracker 10 und dem Reflektor 81 und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Anzieleinheit 20, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu am Messhilfsinstrument 80 angeordneten Markierungen 82, die beispielsweise als Leuchtdioden ausgebildet sein können. Alternativ können die Markierungen 82 auch derart ausgebildet sein, dass diese bei einem Beleuchten, z.B. mit Strahlung einer definierten Wellenlänge, die auftreffende Strahlung reflektieren (als Retroreflektoren ausgebildete Hilfspunkt-Markierungen 82), insbesondere eine bestimmte Leuchtcharakteristik zeigen, oder dass diese ein definiertes Muster oder Farbkodierung aufweisen. Aus der Lage bzw. Verteilung der Markierungen 82 in einem mit dem Sensor der Bilderfassungseinheit erfassten Bild kann somit eine Orientierung des Tastwerkzeugs 80 bestimmt werden.

Der zweite Lasertracker 11 weist eine von der Bilderfassungseinheit 15 separierte Strahlführungseinheit 16 zur Emission eines zweiten Laserstrahls 17 auf, welcher ebenfalls auf den Reflektor 81 ausgerichtet ist. Sowohl der Laserstrahl 17 als auch die Bilderfassungseinheit 15 sind jeweils um zwei Achsen motorisiert schwenkbar und können dadurch derart ausgerichtet werden, dass mittels der Bilderfassungseinheit 15 das mit dem Laserstrahl 17 angezielte Ziel 81 und die Markierungen 82 des Messhilfsinstruments 80 erfasst werden können. Somit können auch hier eine präzise Entfernung zum Reflektor 81 und eine Orientierung des Instruments 80 anhand der räumlichen Lage der Markierungen 82 bestimmt werden.

Zur jeweiligen Ausrichtung der Laserstrahlen 17,21 auf den Reflektor 81 sind an den Lasertrackern 10,11 jeweils Beleuchtungsmittel zur Beleuchtung des Reflektors 81 mit Strahlung einer bestimmten Wellenlänge, insbesondere im infraroten Wellenlängenbereich, vorgesehen und zusätzliche zumindest zwei Kameras mit positionssensitiven Detektoren an jedem Tracker 10,11 angeordnet. Die an dem Reflektor 81 reflektierte und zum Lasertracker 10,11 rückgestrahlte Beleuchtungsstrahlung kann mittels der Kameras detektiert und mit jedem der positionssensitiven Detektoren eine Position des Reflektors 81 auf dem jeweiligen Detektor abgebildet werden. Somit können sowohl mit dem ersten Lasertracker 10 als auch mit dem zweiten Lasertracker 11 zwei abgebildete Positionen des Reflektors bestimmt und in Abhängigkeit dieser abgebildete Zielpositionen das Ziel (Reflektor 81) aufgefunden - z.B. nach allgemein bekannten Prinzipien der Photogrammetrie - und die Anzieleinheit 20 bzw. die Strahlführungseinheit 16 derart ausgerichtet werden, dass das Ziel mit dem Messstrahl 17,21 angezielt wird.

Zudem kann auf Basis jeweils zweier Bilder eines Lasertrackers 10,11 jeweils eine Grobposition des Reflektors bestimmt werden. Diese Position kann nach allgemeinen geometrischen bzw. trigonometrischen Grundsätzen, beispielsweise nach geometrischen Konstruktionsprinzipien von Dreiecken oder mittels Sinus- und/oder Kosinussatz, bestimmt werden. Ausserdem können zu der Grobpositionsbestimmung allgemein bekannte Methoden der Photogrammetrie (Stereophotogrammetrie) eingesetzt werden. Hierfür sind zudem die relativen Positionen und insbesondere Ausrichtungen der Kameras am jeweiligen Tracker 10,11 zueinander bekannt.

Die Beleuchtungsmittel und die Kameras können in diesem Zusammenhang z.B. an der Bilderfassungseinheit 15, der Strahlführungseinheit 16, der Anzieleinheit 20, der Stütze 30 oder der Basis 40 in jeweils definierten Positionen angeordnet sein.

Mittels der Kenntnis der Positionierung der Kameras relativ zu einer Emissionsrichtung des jeweiligen
Laserstrahls 17,21 kann der Laserstrahl 17,21 auf die ermittelte Grobposition des Reflektors 81 ausgerichtet und an diesen angekoppelt werden (lock-on). Dadurch kann trotz eines konstruktiv bedingten Versatzes der Laseremissionsrichtung zu den Erfassungsrichtungen der Kameras eine schnelle Ausrichtung des jeweiligen
Strahls 17,21 erfolgen und eine durch die optischen Achsen der Kameras und den Laserstrahl 17,21 gegebene Parallaxe aufgelöst werden. Im Speziellen kann der Laserstrahl 17,21 direkt, d.h. ohne einen iterativen Zwischenschritt, auf das Ziel 81 ausgerichtet werden.

Insbesondere kann - alternativ oder zusätzlich zur Bestimmung der Grobposition des Reflektors 81 - aus den auf den Detektoren (an einem Lasertracker 10,11) erfassten und abgebildeten Zielpositionen eine Grobentfernung zum Reflektor 81 bestimmt werden. Auch diese Bestimmung kann mittels allgemein gültiger geometrischer Grundsätze erfolgen, z.B. mittels des Höhensatzes für Dreiecke und/oder mittels Sinus- und/oder Kosinussatz.

Ausserdem kann ein erfindungsgemässes Ausrichten des Laserstrahls 17,21 auch bei Lasertrackern ohne Bilderfassungseinheit 15 zur Orientierungsbestimmung (6-DoF Kamera) eines Messhilfsinstruments 80 Anwendung finden (3D-Lasertracker).

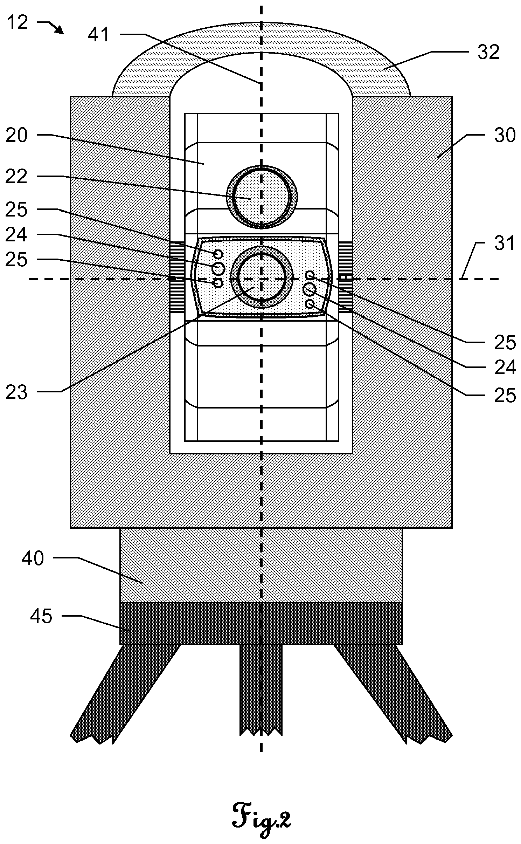

Figur 2 zeigt eine weitere Ausführungsform eines erfindungsgemässen Lasertrackers 12 mit einer Basis 40, die auf einem Stativ 45 angeordnet ist und eine Schwenkachse 41 definiert. Auf der Basis ist zudem eine eine Neigungsachse 31 definierende, um die Schwenkachse 41 relativ zur Basis 40 schwenkbare Stütze 30 mit einem Griff 32 angeordnet. Weiters ist eine Anzieleinheit 20 vorgesehen, wobei diese Anzieleinheit 20 um die Neigungsachse 31 relativ zur Stütze 30 schwenkbar verbaut ist.

Die Anzieleinheit 20 weist ferner eine Variokamera mit einem Variokameraobjektiv 22 und eine Optik 23 auf, die einer in der Anzieleinheit 20 angeordneten Entfernungsmess- und Trackingeinheit zugeordnet ist, wobei vermittels der Optik 23 ein Messlaserstrahl von der Entfernungsmess- und Trackingeinheit zur präzisen Bestimmen einer Entfernung zu einem Ziel und zum Verfolgen des Ziels emittiert wird. Ausserdem sind an der Anzieleinheit 20 zwei Kameras 24 mit jeweils einer Kameraoptik und mit jeweils einem positionssensitiven Detektor und zudem Beleuchtungsmittel 25, welche beispielsweise als LEDs ausgebildet sind und im Betrieb insbesondere Licht im Infrarotbereich emittieren, vorgesehen. Mit diesen Beleuchtungsmitteln 25 kann somit ein Ziel, z.B. ein Reflektor, beleuchtet bzw. angestrahlt werden und zumindest eine Teil der Strahlung durch den Reflektor in Richtung des Lasertrackers 12 bzw. in Richtung der Kameras 24 zurückreflektiert werden. Das reflektierte Licht wird dann mit den Kameras 24 erfasst und vermittels der Kameraoptiken auf dem jeweiligen positionssensitiven Detektor als jeweilige erste und zweite Zielposition abgebildet. Hieraus kann nun für jede dieser Zielpositionen unter Berücksichtigung der Ausrichtung der Detektoren jeweils eine Richtung zur Zielposition und somit ein Versatz relativ zu einer Nullposition auf dem jeweiligen Detektor und/oder ein Richtungswinkel, insbesondere zwei Richtungswinkel für zwei Detektorachsen, z.B. für eine durch die Dimensionierung des Detektors vordefinierte X- und Y-Achse, bestimmt werden. Mittels dieser so erfassten Positionen des Ziels kann ein automatisiertes Auffinden des Ziels erfolgen. Das Auffinden des Ziels kann insbesondere mittels Stereophotogrammetrie erfolgen.

In Abhängigkeit der mittels der zwei Detektoren bestimmten Richtungswinkeln kann dann anhand der bekannten relativen Positionierung der Kameras 24 eine Grobposition des Ziels und/oder eine Grobentfernung zum Ziel, beispielsweise mittels einer mathematisch geometrischen Dreiecks-Konstruktion, grob bestimmt werden.

Mit den bekannten Ausrichtungen der Kameras 24 relativ zur Messrichtung des Messlaserstrahls, welche mittels an der Stahlführungseinheit 16 angeordneter Winkelmesser bzw. mittels an der Basis 40, der Stütze 30 und/oder Anzieleinheit 20 angeordneter Winkelmesser bestimmt werden kann, kann die bestimmte Grobposition bzw. Grobentfernung derart im Lasertracker 12, insbesondere mittels der Steuerungs- und Auswerteeinheit, verarbeitet werden, dass der Messlaserstrahl auf die bestimmte Grobposition und damit auf das Ziel ausrichtbar ist.

Nachdem der Laserstrahl auf den Reflektor 81 ausgerichtet ist und von diesem zurückreflektiert wird, kann mittels einer Feindistanzmesseinheit im Lasertracker 12 bzw. in der Anzieleinheit 20 eine präzise Entfernung zum Reflektor 81 bestimmt werden. Ferner kann der Laserstahl dann an den Reflektor 81 (Retroreflektor) angekoppelt werden und der Reflektor 81 mit dem Strahl verfolgt werden. Hierfür werden auf einem weiteren, dem Strahlengang der Messstrahlung zugeordneten Positionssensor eine Position des reflektierten Messstrahls auf dem Sensor und eine Ablage der auftreffenden Strahlung bezüglich einer Nullpunktposition bestimmt. Mittels dieser Ablage, welche auf dem Sensor in zwei Richtungen bestimmbar ist, kann eine Positionsänderung des Reflektors 81 detektiert und der Laserstrahl entsprechend dieser Änderung nachgeführt und somit fortlaufend der Reflektor 81 angezielt werden.

Die Kameras 24 (mit Kameraoptiken und Detektoren) sind so angeordnet, dass die Sichtfelder der Kameras 24 sich zumindest teilweise überlappen (überschneiden) und das Ziel somit in den Sichtfeldern beider Kameras 24 erfassbar ist, insbesondere mit beiden Kameras 24 gleichzeitig erfassbar ist. Dabei kann die erste Kamera ein grosses Sichtfeld aufweisen, wobei die zweite Kamera ein Sichtfeld aufweisen kann, welches vergleichsweise kleiner ist. Somit können zum einen ein grosser Bereich (mittels der ersten Kamera) erfasst und zugleich eine hohe Genauigkeit bei der Zielpositionsbestimmung (mittels der zweiten Kamera) realisiert werden. Alternativ können beide Kameras 24 ein grosses Sichtfeld aufweisen, damit ein möglichst grosser Überlappungsbereich generierbar ist (bei geringerer Messgenauigkeit), oder beide Kameras 24 mit einem engen Sichtfeld ausgeführt sein, damit eine gesteigerte Genauigkeit bei der Grobpositionsbestimmung erreicht wird (bei kleinerem Überlappungsbereich und damit kleinerem Messbereich).

In der gezeigten Ausführungsform sind die Kameras 24 derart an der Anzieleinheit 20 angeordnet, dass deren Erfassungsrichtungen weder in einer Ebene, die durch die Schwenkachse 41 und den Mittelpunkt der Optik 23 definiert ist, noch in einer Ebene, die durch die Neigungsachse 31 und den Mittelpunkt der Optik 23 definiert ist, liegen, jedoch kann zumindest eine der Kameras in einer alternativen Ausführungsform in einer der entsprechenden Ebenen angeordnet sein.

In einer speziellen Ausführungsform eines erfindungsgemässen Lasertrackers kann das reflektierte Beleuchtungslicht mit mindestens drei Kameras detektiert und somit drei Zielpositionen auf drei positionssensitiven Detektoren und entsprechende Richtungswinkel bestimmt werden. Eine Bestimmung der Grobposition ergibt sich dann in Abhängigkeit der abgebildeten drei Zielpositionen auf den Detektoren.

In einer speziellen Ausführungsform des Lasertrackers 12 kann in Abhängigkeit der durch die reflektierte Beleuchtungsstrahlung abgebildeten Zielpositionen auf den Detektoren mittels mathematisch geometrischer Berechnungsmethoden eine Grobentfernung zum Ziel abgeleitet werden.

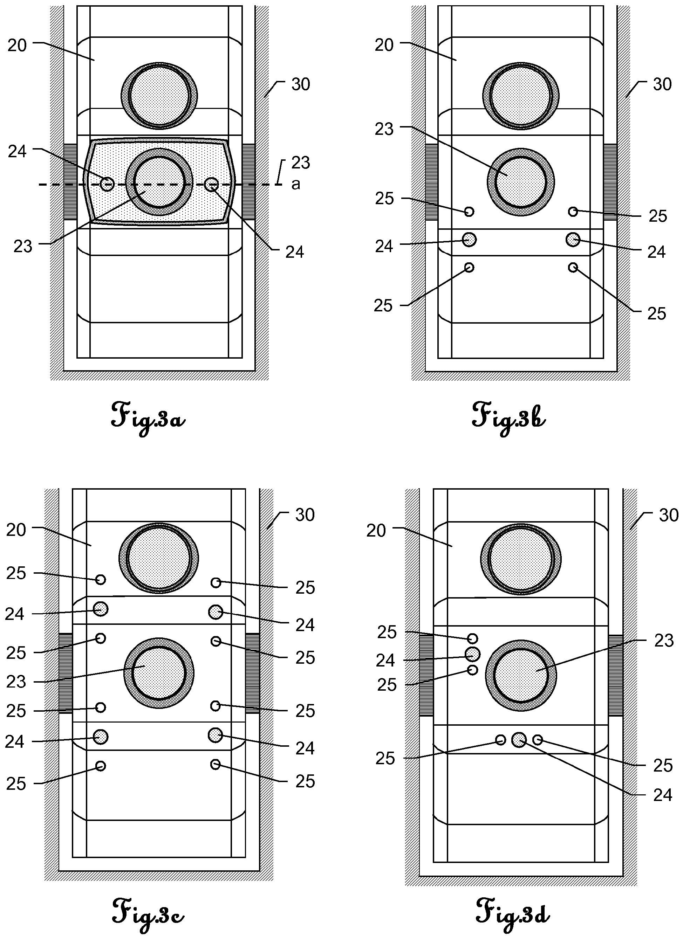

Die Figuren 3a, 3b und 3c zeigen jeweils eine weitere Ausführungsform einer erfindungsgemässen Anzieleinheit 20 eines Lasertrackers. Die Anzieleinheiten 20 sind wiederum um eine Neigungsachse schwenkbar relativ zu einer Stütze 30 angeordnet und weisen eine Optik 23 einer Teleskopeinheit zur Emission einer Messstrahlung und zur präzisen Bestimmung einer Entfernung zu einem Ziel vermittels der Messstrahlung auf. Die Ausführungsformen unterscheiden sich durch die jeweilige Anordnung und/oder Anzahl der vorgesehenen Kameras 24 und Beleuchtungsmittel 25, die z.B. als LEDs ausgebildet sind.

In Figur 3a sind zwei Kameras 24 auf einer gemeinsamen Achse 23a durch den Mittelpunkt der Teleskopoptik 23 angeordnet. Mit den Kameras 24 kann gemäss oben beschriebener Vorgehensweise ein Ziel auf einem jeweiligen Detektor erfasst, mittels weiterer Verarbeitungsschritte aufgefunden und durch eine Ausrichtung der Anzieleinheit 20 mit dem Messstrahl angezielt werden. Die Richtung, in der jede der Kameras 24 einen Reflektor sieht weicht von derjenigen Richtung ab, die für den Messstrahl eingestellt werden muss, um den Reflektor zu treffen. Um diese Abweichung zu ermitteln, kann eine Grobentfernung mit Hilfe des parallaktischen Winkels, der aus den Sichtrichtungen der Kameras 24 zum Reflektor abgeleitet werden kann, bestimmt werden.

Figur 3b zeigt ebenfalls zwei Kameras 24, welche versetzt unterhalb der Optik 23 angeordnet sind, und vier Beleuchtungsmittel 25, die zur Beleuchtung des Ziels dienen. Die Beleuchtungsmittel 25 sind hier jeweils symmetrisch um die jeweilige Kamera 24 angeordnet. Auch mit dieser erfindungemässen Ausführungsform lässt sich ein Auffinden eines reflektierenden Ziels anhand zweier mit den Kameras 24 erfasster Bilder durchführen. Durch den Versatz der optischen Achsen der Kameras 24 relativ zum Mittelpunkt der Teleskopoptik 23, durch welchen im Wesentlichen der Messstrahl der Anzieleinheit 20 emittiert wird, kann das Auffinden hier im Speziellen durch die Bestimmung einer Grobentfernung zum Ziel aus den beiden erfassten Bildern (Photogrammetrie) realisiert werden. Hierzu kann beispielsweise mittels geometrischer Berechnungsgrundsätze eine Höhe eines durch die Kamerapositionen und das Ziel definierten Dreiecks bestimmt werden. Zudem kann mit einer zusätzlichen Berücksichtigung der Richtungen zum Ziel eine Grobposition des Ziels bestimmt werden. Die Richtungen zum Ziel können dabei aus den erfassten Bildern abgeleitet werden.

Die Figur 3c zeigt eine weitere erfindungsgemässe Ausführungsform der Anzieleinheit 20 mit vier Kameras 24, welchen jeweils zwei Beleuchtungsmittel 25 zur Beleuchtung eines Ziels zugeordnet sind. Die Kameras 24 sind dabei in einem definierten Positionsverhältnis relativ zu einer Messachse, deren Lage durch die Optik 23 definiert ist, angeordnet. Durch die grössere Anzahl von Kameras 24 und die damit erfassbaren Bilder eines gemeinsamen reflektierenden Ziels kann das Auffinden des Ziels mittels dieser Bilder genauer erfolgen und somit ein schnelleres Anzielen des Ziels mit der Messstrahlung erreicht werden. Ausserdem bietet diese Ausführungsform den Vorteil der Redundanz, d.h. sollte eine (oder zwei) der Kameras 24 ausfallen, so kann das Ziel immer noch mittels der verbleibend funktionierenden Kameras 24 aufgefunden werden. Ein weiterer Vorteil durch eine derartige Anordnung der Kameras 24 ist ein dadurch entstehendes vergrössertes Gesamtsichtfeld, das sich aus der teilweisen Überschneidung der jeweiligen Kamerasichtfelder ergibt. Insbesondere kann somit eine gesteigerte Genauigkeit hinsichtlich der Zielauffindung bzw. Zielpositionsbestimmung erreicht werden, im Speziellen in einem Bereich um die Messachse. Dafür können sich die vier Kamerasichtfelder in diesem Bereich gemeinsam überlappen. Durch die grössere Anzahl von Kameras 24 und die damit erfassbaren Bilder eines gemeinsamen reflektierenden Ziels kann, neben dem genaueren Auffinden des Ziels mittels dieser Bilder, ein schnelleres Anzielen des Ziels mit der Messstrahlung erreicht werden.

Die Figur 3d zeigt eine weitere erfindungsgemässe Ausführungsform der Anzieleinheit 20 mit zwei Kameras 24, welchen jeweils zwei Beleuchtungsmittel 25 zur Beleuchtung eines Ziels zugeordnet sind. Die Kamera-Beleuchtungsmittel-Kombinationen sind hierbei asymmetrisch um die Teleskopoptik 23 angeordnet sind. Eine erste diese Kombinationen ist seitlich und die zweite unterhalb der Teleskopoptik 23 angeordnet.

Die Kameras 24 sind dabei wiederum im Wesentlichen jeweils paarweise achsensymmetrisch zur Messrichtung, deren Lage durch den Mittelpunkt der Optik 23 definiert ist, angeordnet. Durch die grössere Anzahl von Kameras 24 und die damit erfassbaren Bilder eines gemeinsamen reflektierenden Ziels kann das Auffinden des Ziels mittels dieser Bilder genauer erfolgen und somit ein schnelleres Anzielen des Ziels mit der Messstrahlung erreicht werden. Mittels der spezifischen Anordnung der Beleuchtungsmittel 25 an der Anzieleinheit 20 kann auch mit dieser Ausführung ein erfindungsgemässes Auffinden des Ziels erfolgen.

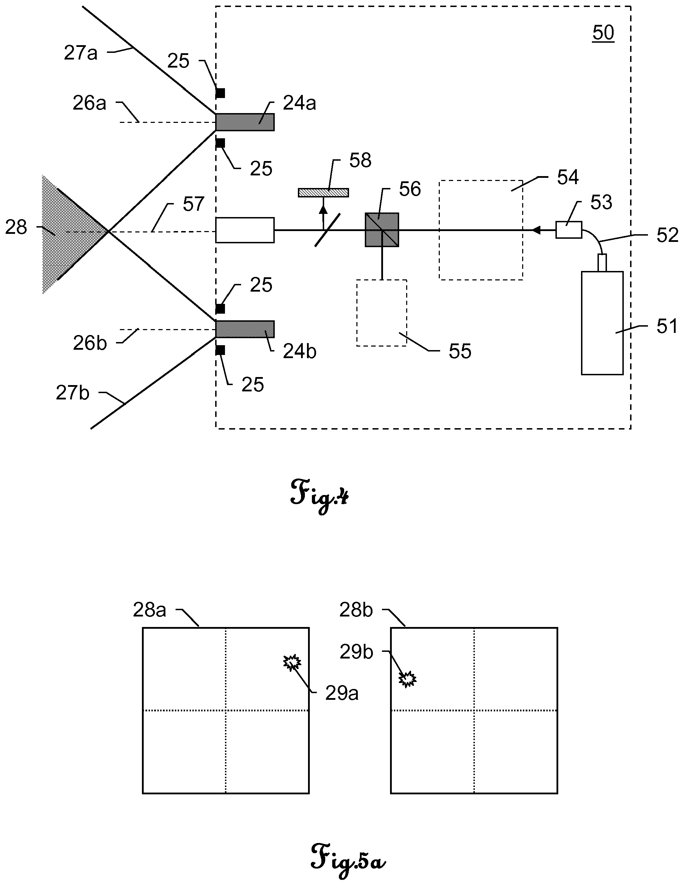

Figur 4 zeigt eine Ausführungsform eines optischen Aufbaus eines erfindungsgemässen Lasertrackers. Eine optische Einheit 50 des Lasertrackers weist dabei eine Laserstrahlquelle 51 - beispielsweise eine HeNe-Laserquelle oder eine Laserdiode - und einen Kollimator 53 zur Einkopplung der mit der Strahlquelle 51 erzeugten Laserstrahlung in den Messstrahlengang auf. Die Strahlung wird im gezeigten Aufbau mittels einer optischen Faser 52 von der Laserstrahlquelle 51 zum Kollimator 53 geführt, kann aber alternativ auch direkt oder durch optische Umlenkmittel in den Messstrahlengang eingekoppelt werden. Die optische Einheit 50 verfügt zudem über eine Interferometereinheit 54 mittels deren Entfernungsänderungen zum Ziel detektiert und gemessen werden können. Die mit der Strahlquelle 51 erzeugte Strahlung wird als Messstrahlung für das Interferometer 54 benutzt, im Interferometer 54 in einen Referenzpfad und Messpfad aufgespaltet und nach Reflexion des Messstrahls am Ziel zusammen mit dem Referenzstrahl an einem Detektor detektiert. Ausserdem ist eine Absolutdistanzmesseinheit 55 mit einer weiteren Strahlquelle und einem weiteren Detektor vorgesehen. Diese Einheit 55 dient zur Distanzbestimmung zum Ziel, wobei die damit erzeugte Strahlung vermittels eines Strahlteilers 56 zusammen mit der Interferometerstrahlung auf einen gemeinsamen Messstrahlengang geführt wird. Die Anordnung der optischen Bauteile und die Führung der Messstrahlung in der optischen Einheit 50 definierten eine Messrichtung bzw. eine optische Messachse 57. Für eine präzise Bestimmung einer Entfernung zum Ziel können Messwerte von sowohl Absolutdistanzmesser 55 und Interferometer 54 berücksichtigt und insbesondere verknüpft werden. In einer speziellen Ausführungsform eines Lasertrackers können Absolutdistanzmesser 55 und Interferometer 54 unterschiedliche Messstrahlengänge definieren und/oder baulich separiert, insbesondere in unterschiedlichen Messgruppen, angeordnet sein.

Die optische Einheit 50 weist ferner zwei Kameras 24a,25a mit einer jeweiligen optischen Achse bzw. Erfassungsrichtung 26a,26b und Beleuchtungsmittel 25 auf. Des Weiteren definiert jede der Kameras 24a,24b ein Sichtfeld 27a,27b, wobei die Kameras 24a,25a derart angeordnet sind, dass die Sichtfelder 27a,27b überlappen und somit ein Überlappungsbereich 28 festgelegt ist.

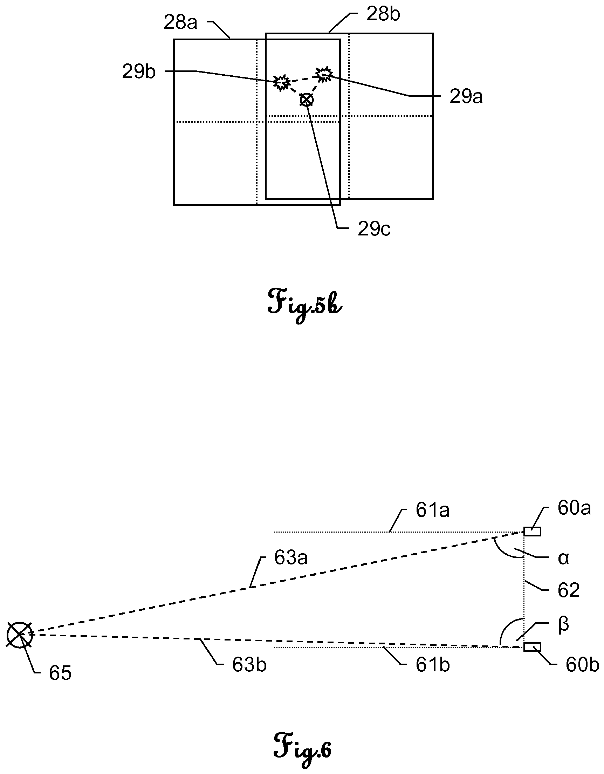

Mittels der Beleuchtungsmittel 25 kann elektromagnetische Strahlung zur Beleuchtung des Ziels emittiert werden. Wird diese Strahlung am Ziel reflektiert und zumindest teilweise in Richtung der beiden Kameras 24a,24b reflektiert, kann die reflektierte Beleuchtungsstrahlung mit beiden Kameras 24a,24b in jeweils einem Bild als Zielposition erfasst werden. Durch die derartige Anordnung der Kameras 24a,24b, dass ein überlappender Sichtbereich 28 vorliegt, kann das Ziel in diesem Bereich 28 mit beiden Kameras 24a,24b erfasst werden. Eine beispielhafte Ausführung eines Zielerfassens und eines Auffinden des Ziels mittels erfasster Bilder ist in den Figuren 5a und 5b gezeigt.

Zudem ist in der optischen Einheit 50 ein positionssensitiver Detektor 58 (PSD) derart angeordnet, dass am Ziel reflektierte Messlaserstrahlung auf diesem detektiert werden kann. Mittels dieser PSD 58 kann eine Ablage des erfassten Strahls aus einem Detektornullpunkt bestimmt und auf Basis der Ablage ein Nachführen des Laserstahls auf das Ziel erfolgen. Zu diesem Zweck und zum erreichen einer hohen Genauigkeit ist das Sichtfeld dieser PSD 58 möglichst klein, d.h. korrespondierend zum Strahldurchmesser Messlaserstrahls, gewählt. Eine Erfassung mit der PSD 58 erfolgt koaxial zur Messachse 57, sodass die Erfassungsrichtung der PSD 58 der Messrichtung entspricht. Die Anwendung des PSD-basierten Trackings und der Feinanzielung kann erst erfolgen, nachdem der Messlaser auf das retro-reflektierende Ziel anhand der Bilderfassung der beiden Kameras 24a,24b und einer photogrammetrischen Auswertung der Bilder ausgerichtet worden ist.

Die Figur 5a zeigt zwei positionssensitive Detektoren 28a,28b, wobei auf jeden Detektor eine Zielposition 29a,29b abgebildet ist. Die Zielpositionen 29a,29b können durch einen Reflex von Beleuchtungsstrahlung am Ziel mit den Detektoren 28a,28b zweier Kameras erfasst werden. Hierbei können zwei Bilder erzeugt werden, welche jeweils eine Zielposition 29a,29b zeigen und somit eine relative Richtung jedes Detektors 28a,28b zum Ziel angeben bzw. eine Abweichung der Zielpositionen 29a,29b von einem Detektornullpunkt anzeigen.

Figur 5b zeigt eine Überlagerung der mit den Detektoren 28a,28b erzeugten Bilder mit den Zielpositionen 29a,29b. Die erfassten Zielpositionen 29a,29b sind hierbei in ein gemeinsames, relativ zur Messeinheit des Lasertrackers referenziertes Koordinatensystem übertragen. Das Auffinden des Ziels 29c kann nun mittels einer (koordinativen) Auswertung der ersten Zielposition 29a und der zweiten Zielposition 29b erfolgen, wobei beispielsweise eine Verbindungsstrecke zwischen den Positionen 29a,29b konstruiert und daraus eine Zielkoordinate bestimmt werden kann. Eine solche Bestimmung kann insbesondere bei einer achsensymmetrischen Verteilung der Detektoren 28a,28b um eine Teleskopoptik bzw. um die Messachse erfolgen. Mit der bekannten und fixen relativen Positionierung der Kameras bzw. Detektoren 28a,28b zueinander kann in Folge eine Grobentfernung zum Ziel und/oder eine Grobposition des Ziels berechnet werden.

Auf Basis dieser Ziellokalisation und mit bekannter Positionierung der Kameras zur Messeinheit (Interferometer und Absolutdistanzmesser) bzw. zu deren Emissionsrichtung kann ferner der Messlaserstrahl des Lasertrackers auf die Position des Ziels ausgerichtet und eine präzise Entfernung zum Ziel bestimmt werden.

Mit Hilfe einer derartigen Zielfindung kann das Anzielen des Ziels 29c effizienter, schneller und direkt erfolgen, wobei eine iterative Annäherung nach Methoden des Standes der Technik mehrere Schritte erfordert und somit zeitintensiver und ungenauer ist.

Die Bestimmung der Grobentfernung oder der Grobposition kann im Speziellen mittels Heranziehen geometrischer Rechengrundsätze erfolgen. Beispielhaft ist dies in Figur 6 verdeutlicht. Hier erfassen zwei Kameras 60a,60b jeweils das Ziel 65 und sind derart zueinander positioniert, dass eine Verbindungsstrecke 62 zwischen den Kameras 60a,60b, insbesondere hinsichtlich deren Länge, und die jeweiligen Erfassungsrichtungen 61a,61b der Kameras 60a,60b bekannt sind (photogrammetrische Basis). Aus den mit den Kameras 60a,60b erfassten Bildern kann jeweils eine Richtung 63a,63b zum Ziel bestimmt und somit ein Winkel α zwischen der Richtung 63a und der Verbindungsstrecke 62 und ein Winkel β zwischen der Richtung 63b und der Verbindungsstrecke 62 abgeleitet werden.

Auf Basis dieser bestimmten Angaben kann beispielsweise durch Heranziehen des "Höhensatzes für Dreiecke" (hₐ=c*sin β), der "Winkelsumme im Dreieck" (α+β+γ=180°) und des "Sinussatzes" (a/sin α = c/sin γ) eine Entfernung von der Verbindungsstrecke 62 zum Ziel 65 berechnet werden.

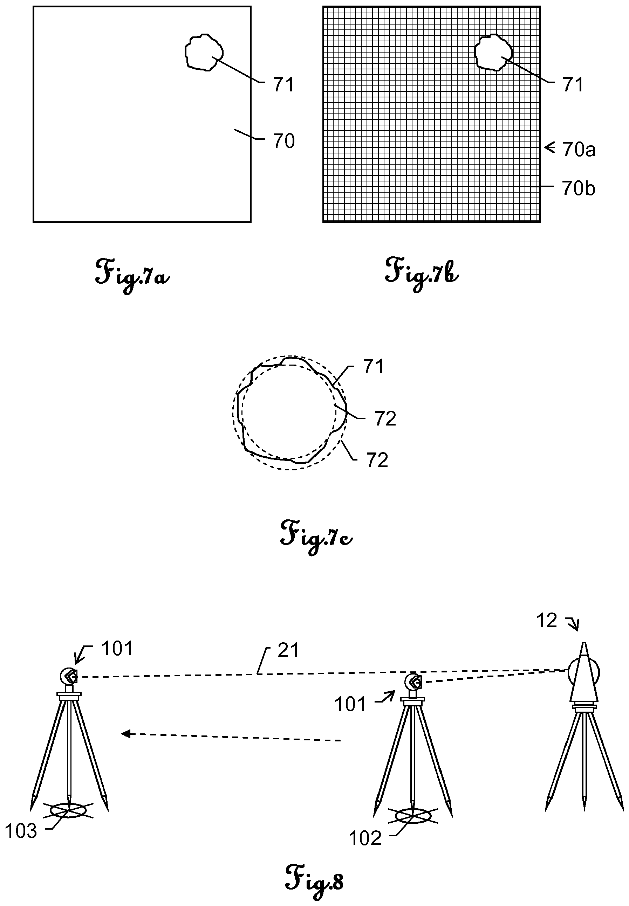

Figur 7a zeigt ein mit einer Kamera eines erfindungsgemässen Lasertrackers mit einem positionssensitiven Detektor erfasstes Bild 70 mit einer im Bild erfassten Beleuchtungsstrahlung, die von einem beleuchteten Ziel reflektiert wurde. Gemäss der Form des Strahlungsquerschnitts der Beleuchtungsstrahlung ist im Bild 70 eine Beleuchtungsstrahlungsquerschnittsform 71 erfasst. Figur 7b zeigt in diesem Zusammenhang die Lage der eingestrahlten Beleuchtungsstrahlung auf dem positionssensitiven Detektor 70a der Kamera. Die auf den Detektor 70a treffende Strahlung 71 erstreckt sich über eine Anzahl einzelner Sensorbildpunkte 70b, wobei die Form der Strahlung in Abhängigkeit der Grösse und Anzahl von Sensorbildpunkten 70b bestimmt werden kann.

Zur Bestimmung der Lage der Beleuchtungsstrahlungsquerschnittsform 71 auf dem Sensor 70a bzw. im Bild 70 kann eine Analyse basierend auf Bildverarbeiten derart ausgeführt werden, dass damit ein Zielpunkt bestimmt wird, welcher die Lage der Beleuchtungsstrahlung im Bild repräsentiert. Die Steuerungs- und Auswerteeinheit des Lasertrackers weist hierzu erfindungsgemäss eine Zielpositionsbestimmungsfunktionalität auf, bei deren Ausführung die erste (und die zweite) Zielposition im ersten (und zweiten) Bild 70 mittels Bildverarbeiten derart bestimmt werden, dass durch die jeweilige Zielposition eine Lage im Bild 70 der im jeweiligen Bild 70 erfassten Beleuchtungsstrahlungsquerschnittsform 71 repräsentiert wird. Dies kann insbesondere mittels Schwerpunktberechnen basierend auf der im jeweiligen Bild 70 erfassten Beleuchtungsstrahlungsquerschnittsform 71, insbesondere mittels Helligkeits- und/oder Kontrastanalyse, erfolgen.

Alternativ oder zusätzlich kann das Bestimmen der Lage - wie in Figur 7c gezeigt - mittels Matchen, insbesondere In-Übereinstimmung-Bringen, der im jeweiligen Bild erfassten Beleuchtungsstrahlungsquerschnittsform 71 mit einem gespeicherten Muster 72 (hier: Kreisform) anhand einer Best-Fit-Methode erfolgen, insbesondere mit Subbildpunktgenauigkeit, wobei anhand der in Übereinstimmung gebrachten Lage des Musters 72 im Bild die jeweilige Zielposition der im Bild erfassten Beleuchtungsstrahlung 71 bestimmt wird, insbesondere mit Subbildpunktgenauigkeit.

Insbesondere kann dabei für das gespeicherte Muster eine Information mitgespeichert sein, die eine musterintern definierte, für die letztendliche Ermittlung der Zielposition heranzuziehende Muster-Position innerhalb des Musters ableiten lässt, im Speziellen wobei die Information die musterintern definierte Muster-Position selbst ist oder ein definierter Muster-Positions-Bestimmungsalgorithmus wie etwa ein Musterschwerpunkt-Bestimmungsalgorithmus.

Ist also das Muster 72 an die Form der erfassten Beleuchtungsstrahlung angepasst, so kann aufgrund der bereits gespeicherten Mustereigenschaften ein bestimmter Punkt - bei der hier gezeigten Kreisform beispielsweise der Kreismittelpunkt - als zu bestimmende Zielposition im Bild 70 bzw. auf dem Sensor 70a abgeleitet werden. Das Muster 72 kann hierbei z.B. auch als Ellipse oder Polygon definiert sein.

Figur 8 zeigt eine erfindungsgemässe Methode zur Kalibrierung von Position und Ausrichtung von zumindest zwei Kameras 24 eines Lasertrackers 12 gemäss der Erfindung, insbesondere gemäss einer Ausführungsform nach einer der Figuren 1-4.

Die zwei Kameras 24 weisen jeweils eine Kameraoptik und jeweils einen positionssensitiven Detektor und zudem Beleuchtungsmittel 25, welche beispielsweise als LEDs ausgebildet sind und im Betrieb insbesondere Licht im Infrarotbereich emittieren, auf. Mit diesen Beleuchtungsmitteln 25 kann somit ein Ziel 101, z.B. ein Reflektor, beleuchtet bzw. angestrahlt werden und zumindest eine Teil der Strahlung durch den Reflektor in Richtung des Lasertrackers 12 bzw. in Richtung der Kameras 24 zurückreflektiert werden. Das reflektierte Licht wird dann mit den Kameras 24 erfasst und vermittels der Kameraoptiken auf dem jeweiligen positionssensitiven Detektor als jeweiliger erster und zweiter Bildpunkt bzw. Zielposition abgebildet.

Hieraus kann - nach erfolgter Kalibrierung des Systems 12 - für jede dieser Zielpositionen unter Berücksichtigung der Ausrichtung der Detektoren jeweils eine Richtung zur Zielposition und somit ein Versatz relativ zu einer Nullposition auf dem jeweiligen Detektor und/oder ein Richtungswinkel bestimmt werden. Mittels dieser so erfassten Positionen des Ziels kann ein automatisiertes Auffinden des Ziels 101 erfolgen.

Für die Kalibrierung wird das Ziel 101 in einer ersten Position 102 mittels der Messstrahlung 21 angemessen und zudem werden die jeweiligen Zielpositionen der reflektierten Beleuchtungsstrahlung auf den positionssensitiven Detektoren der Kameras 24 bestimmt. Anschliessend wird das Ziel 101 in die Position 103 versetzt und der Messvorgang wiederholt. Alternativ kann auch ein zweites Ziel in der Position 103 verwendet werden. Aus den damit erfassten Messdaten kann die Kalibrierung des Systems 12 so erfolgen, dass die relative Positionierung der Kameras zueinander und zur Messachse abgeleitet werden kann. Die Anzielrichtung für die Messstrahlung ist dabei jeweils bekannt und die Zielpositionen können dieser Richtung jeweils zugeordnet werden. Aus diesen Verhältnissen kann dann auf eine Orientierung der jeweiligen Kamera geschlossen werden.

Mit anderen Worten weist der Lasertracker 12 eine Kalibierfunktion auf, bei deren Ausführung die bekannte Positionierung und Ausrichtung der ersten und zweiten Kamera relativ zueinander und relativ zur Messachse bestimmt werden. In diesem Rahmen wird insbesondere das Ziel 101 in verschiedenen Positionen 102, 103 bereitgestellt und mittels der Messstrahlung 21 angezielt und vermessen, für jede Position 102, 103 des Ziels 101 wird die erste und zweite Zielposition bestimmt und aus dem Vermessen des Ziels 101 und den dazu bestimmten Zielpositionen im Bild die relative Positionierung und Ausrichtung der Kamera abgeleitet.

## Patentansprüche

1. Lasertracker (10,11,12) zur fortlaufenden Verfolgung eines reflektierenden Ziels (29c,65,81) und zur Positionsbestimmung des Ziels (29c,65,81) mit
• einer eine Stehachse (41) definierenden Basis (40),
• einer Strahllenkeinheit zur Emission einer Messstrahlung (17,21) und zum Empfang von zumindest einem Teil der am Ziel (29c,65,81) reflektierten Messstrahlung (17,21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17,21) eine Messachse (57) definiert ist,
• einer Feindistanzmesseinheit zur präzisen Distanzbestimmung zum Ziel (29c, 65, 81) vermittels der Messstrahlung (17, 21),
• einer Winkelmessfunktionalität zur Bestimmung einer Ausrichtung der Strahllenkeinheit relativ zur Basis (40),
• einer ZielsucheinheiL mit
□ Beleuchtungsmitteln (25) zur Beleuchtung des Ziels (29c,65,81) mit elektromagnetischer Beleuchtungsstrahlung,
□ einer ersten ein erstes Sichtfeld (27a) definierenden Kamera (24, 24a, 60a) mit einem ersten positionssensitiven Detektor (28a), wobei
· mit der ersten Kamera (24, 24a, 60a) ein erstes Bild erfassbar isL und im ersten Bild zumindest ein Teil der am Ziel (29c, 65, 81) reflektierten Beleuchtungsstrahlung als erste Zielposition (29a) bestimmbar ist und
· die erste Kamera (24,24a,60a) mit deren optischer Achse (26a) versetzt zur Messachse (57) angeordnet ist, und
□ einer zweiten ein zweites Sichtfeld (27b) definierenden Kamera (24,24b,60b) mit einem zweiten positionssensitiven Detektor (28b), wobei
· mit der zweiten Kamera (24,24b,60b) ein zweites Bild erfassbar ist und im zweiten Bild zumindest ein Teil der am Ziel (29c, 65, 81) reflektierten Beleuchtungsstrahlung als zweite Zielposition (29b) bestimmbar ist,
· die zweite Kamera (24,24b,60b) mit deren optischer Achse (26b) versetzt zur Messachse (57) angeordnet ist und
· die zweite Kamera (24,24b,60b) mit relativ zur ersten Kamera (24, 24a, 60a) und zur Messachse (57) bekannter und fixer Positionierung und Ausrichtung angeordnet ist sowie die erste und zweite Kamera (24,24a,24b,60a,60b) dabei derart angeordnet sind, dass die Sichtfelder (27a,27b) der ersten und zweiten Kamera (24, 24a, 24b, 60a, 60b) zumindest teilweise überlappen,
und
• einem - an den Messstrahlengang gekoppelten sowie einen im Gegensatz zur ersten und zweiten Kamera (24,24a,24b,60a,60b) engen Sichtbereich aufweisenden - positionssensitiven Detektor (58) zur Feinanzielung und Verfolgung des Ziels (29c,65,81) mittels Detektion von am Ziel (29c,65,81) reflektierter Messstrahlung (17,21),
wobei
• im Rahmen der Zielsucheinheit eine derart konfigurierte Steuerungs- und Auswerteeinheit vorhanden ist, dass bei Ausführung einer Suchfunktionalität ein Auffinden des Ziels (29c,65,81) in Abhängigkeit von einer Zusammenschau der ersten und zweiten Zielposition (29a, 29b) erfolgt und basierend darauf die Messstrahlung (17, 21) durch Steuerung der Strahllenkeinheit automatisch auf das Ziel (29c, 65, 81) ausrichtet wird, sodass die Messstrahlung (17, 21) auf das Ziel (29c, 65, 81) trifft und mittels der Feindistanzmesseinheit die Distanz zum Ziel (29c, 65, 81) präzise bestimmbar ist,
**dadurch gekennzeichnet, dass**
• der Lasertracker (10, 11, 12) eine Kalibierfunktion aufweist, bei deren Ausführung die bekannte Positionierung und Ausrichtung der ersten und zweiten Kamera (24, 24a, 24b, 60a, 60b) relativ zueinander und relativ zur Messachse (57) bestimmt werden, wobei im Rahmen der Kalibierfunktion
□ das Ziel (29c, 65, 81) unter Bereitstellung des Ziels in verschiedenen Positionen - mittels der Messstrahlung (17, 21) in den verschiedenen Positionen angezielt und vermessen wird,
□ für jede Position des Ziels (29c, 65, 81) die erste und zweite Zielposition (29a-b) bestimmt wird und
□ aus dem Vermessen des Ziels (29c, 65, 81) und den dazu bestimmten Zielpositionen (29a-b) die relative Positionierung und Ausrichtung abgeleitet wird.

2. Lasertracker (10,11,12) zur fortlaufenden Verfolgung eines reflektierenden Ziels (29c,65,81) und zur Positionsbestimmung des Ziels (29c, 65, 81) mit
• einer eine Stehachse (41) definierenden Basis (40),
• einer Strahllenkeinheit zur Emission einer Messstrahlung (17,21) und zum Empfang von zumindest einem Teil der am Ziel (29c,65,81) reflektierten Messstrahlung (17, 21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17, 21) eine Messachse (57) definiert ist,
• einer Feindistanzmesseinheit zur präzisen Distanzbestimmung zum Ziel (29c, 65, 81) vermittels der Messstrahlung (17, 21),
• einer Winkelmessfunktionalität zur Bestimmung einer Ausrichtung der Strahllenkeinheit relativ zur Basis (40),
• einer Zielsucheinheit mit
□ Beleuchtungsmitteln (25) zur Beleuchtung des Ziels (29c, 65, 81) mit elektromagnetischer Beleuchtungsstrahlung,
□ einer ersten ein erstes Sichtfeld (27a) definierenden Kamera (24, 24a, 60a) mit einem ersten positionssensitiven Detektor (28a), wobei
• mit der ersten Kamera (24, 24a, 60a) ein erstes Bild erfassbar ist und im ersten Bild zumindest ein Teil der am Ziel (29c, 65, 81) reflektierten Beleuchtungsstrahlung als erste Zielposition (29a) bestimmbar ist und
· die erste Kamera (24, 24a, 60a) mit deren optischer Achse (26a) versetzt zur Messachse (57) angeordnet ist, und
□ einer zweiten ein zweites Sichtfeld (27b) definierenden Kamera (24,24b,60b) mit einem zweiten positionssensitiven Detektor (28b), wobei
· mit der zweiten Kamera (24,24b,60b) ein zweites Bild erfassbar ist und im zweiten Bild zumindest ein Teil der am Ziel (29c, 65, 81) reflektierten Beleuchtungsstrahlung als zweite Zielposition (29b) bestimmbar ist,
· die zweite Kamera (24, 24b, 60b) mit deren optischer Achse (26b) versetzt zur Messachse (57) angeordnet ist und
· die zweite Kamera (24, 24b, 60b) mit relativ zur ersten Kamera (24, 24a, 60a) und zur Messachse (57) bekannter und fixer Positionierung und Ausrichtung angeordnet ist sowie die erste und zweite Kamera (24, 24a, 24b, 60a, 60b) dabei derart angeordnet sind, dass die Sichtfelder (27a, 27b) der ersten und zweiten Kamera (24, 24a, 24b, 60a, 60b) zumindest teilweise überlappen,
und
• einem - an den Messstrahlengang gekoppelten sowie einen im Gegensatz zur ersten und zweiten Kamera (24, 24a, 24b, 60a, 60b) engen Sichtbereich aufweisenden - positionssensitiven Detektor (58) zur Feinanzielung und Verfolgung des Ziels (29c, 65, 81) mittels Detektion von am Ziel (29c, 65, 81) reflektierter Messstrahlung (17, 21),
wobei
• im Rahmen der Zielsucheinheit eine derart konfigurierte Steuerungs- und Auswerteeinheit vorhanden ist, dass bei Ausführung einer Suchfunktionalität ein Auffinden des Ziels (29c, 65, 81) in Abhängigkeit von einer Zusammenschau der ersten und zweiten Zielposition (29a, 29b) erfolgt und basierend darauf die Messstrahlung (17, 21) durch Steuerung der Strahllenkeinheit automatisch auf das Ziel (29c, 65, 81) ausrichtet wird, sodass die Messstrahlung (17, 21) auf das Ziel (29c, 65, 81) trifft und mittels der Feindistanzmesseinheit die Distanz zum Ziel (29c, 65, 81) präzise bestimmbar ist,
**dadurch gekennzeichnet, dass**
• die Steuerungs- und Auswerteeinheit eine Zielpositionsbestimmungsfunktionalität aufweist, bei deren Ausführung die erste und die zweite Zielposition (29a-b) im ersten und zweiten Bild mittels Bildverarbeiten derart bestimmt werden, dass im jeweiligen Bild mittels Helligkeits- und/oder Kontrastanalyse eine Form des Strahlungsquerschnitts der am Ziel (29c, 65, 81) reflektierten und im Bild erfassten Beleuchtungsstrahlung bestimmt wird, und mittels Schwerpunktberechnens basierend auf der im jeweiligen Bild erfassten Form die erste und zweite Zielposition (29a-b) bestimmt werden, welche jeweils die Lage der im Bild erfassten Beleuchtungsstrahlung im jeweiligen Bild repräsentieren.

3. Lasertracker (10, 11, 12) nach Anspruch 2,
**dadurch gekennzeichnet, dass**
die Zielpositionsbestimmungsfunktionalität derart konfiguriert ist, dass die erste und zweite Zielposition (29a-b) bestimmt werden
• mittels Matchen, insbesondere In-Übereinstimmung-Bringen, der im jeweiligen Bild erfassten Form miL einem gespeicherten Muster anhand einer Best-Fit-Methode, insbesondere mit Subbildpunktgenauigkeit, wobei anhand der in Übereinstimmung gebrachten Lage des Musters im Bild die jeweilige Zielposition (29ab) der im Bild erfassten Beleuchtungsstrahlung bestimmt wird, insbesondere mit Subbildpunktgenauigkeit.

4. Lasertracker (10, 11, 12) nach einem der Ansprüche 1 bis 3,
**dadurch gekennzeichnet, dass**
die Steuerungs- und Auswerteeinheit derart konfiguriert ist, dass bei Ausführung der Suchfunktionalität Vieldeutigkeiten, die bei einer Heranziehung von nur der ersten Zielposition (29a) zum Auffinden des Ziels (29c, 65, 81) und durch eine durch die Messachse (57) und die optischen Achsen (26a, 26b) der ersten und zweiten Kamera (24, 24a, 24b, 60a, 60b) gegebene Parallaxe vorhanden sind, durch eine gemeinsame Heranziehung von sowohl der ersten als auch der zweiten Zielposition (29a, 29b) zum Auffinden des Ziels (29c, 65, 81) aufgelöst werden.

5. Lasertracker (10, 11, 12) nach einem der Ansprüche 1 bis 4,
**dadurch gekennzeichnet, dass**
die Steuerungs- und Auswerteeinheit derart konfiguriert ist, dass bei Ausführung der Suchfunktionalität in Abhängigkeit von der ersten und zweiten Zielposition (29a, 29b) eine Grobentfernung zum Ziel (29c, 65, 81) bestimmt wird,
insbesondere wobei
die Steuerungs- und Auswerteeinheit derart konfiguriert ist, dass bei Ausführung der Suchfunktionalität in Abhängigkeit von der ersten und zweiten Zielposition (29a, 29b) jeweils eine Zielrichtung (63a, 63b) zum Ziel (29c, 65, 81) abgeleitet und eine Grobposition in Abhängigkeit von den Zielrichtungen (63a, 63b) bestimmt wird, insbesondere mittels Photogrammetrie.

6. Lasertracker (10, 11, 12) nach einem der Ansprüche 1 bis 5,
**dadurch gekennzeichnet, dass**
die erste und zweite Kamera (24, 24a, 24b, 60a, 60b) derart angeordnet sind, dass
• die Messachse (57) zumindest teilweise in einem durch die überlappenden Sichtfelder (27a, 27b) der ersten und zweiten Kamera (24, 24a, 24b, 60a, 60b) definierten Überlappungsbereich (28) liegt,
und/oder
• deren optische Achsen (26a, 26b) jeweils
□ parallel versetzt zur Messachse (57) oder
□ in einem definierten Winkel relativ zur Messachse (57) angeordnet sind,
und/oder
• die erste und zweite Kamera (24, 24a, 24b, 60a, 60b) achsensymmetrisch relativ zur Messachse (57) angeordnet sind.

7. Lasertracker (10, 11, 12) nach einem der Ansprüche 1 bis 6,
**dadurch gekennzeichnet, dass**
die Beleuchtungsmittel (25) derart ausgebildet sind, dass die elektromagnetische Beleuchtungsstrahlung divergent mit einer Wellenlänge im infraroten Bereich emittierbar ist,
insbesondere wobei
die erste und zweite Kamera (24, 24a, 24b, 60a, 60b) derart ausgebildet sind, dass im Wesentlichen nur infrarote Beleuchtungsstrahlung erfassbar ist, insbesondere wobei die erste und zweite Kamera (24, 24a, 24b, 60a, 60b) jeweils eine Filtereinheit zur im Wesentlichen ausschliesslichen Transmission der infraroten Strahlung auf den jeweiligen positionssensitiven Detektor (28a-b) aufweisen.

8. Lasertracker (10, 11, 12) nach einem der Ansprüche 1 bis 7,
**dadurch gekennzeichnet, dass**
der Lasertracker (10, 11, 12) eine dritte oder mehrere Kameras (24) mit einem dritten oder mehreren positionssensitiven Detektoren zur Erfassung einer dritten oder mehreren Zielpositionen aufweist, wobei die dritte oder mehreren Kameras (24) derart angeordnet sind, dass eine dritte oder mehrere optische Achsen der dritten oder mehreren Kameras versetzt zur Messachse (57) angeordnet sind, und die Steuerungs- und Auswerteeinheit derart konfiguriert ist, dass bei Ausführung der Suchfunktionalität das Suchen des Ziels (29c, 65, 81) in Abhängigkeit von den drei oder mehreren Zielpositionen erfolgt, insbesondere wobei zumindest eine der Kameras (24) zur Erfassung elektromagnetischer Strahlung in einem definierten Bereich um eine Beleuchtungswellenlänge der Beleuchtungsstrahlung ausgebildet ist.

9. Lasertracker (10, 11, 12) nach einem der Ansprüche 1 bis 8,
**dadurch gekennzeichnet, dass**
der Lasertracker (10, 11, 12) aufweist
• eine um die Stehachse (41) relativ zur Basis (40) motorisiert schwenkbare und die Neigungsachse (31) definierende Stütze (30) und
• eine als Strahllenkeinheit ausgebildete, um die Neigungsachse (31) relativ zur Stütze (30) motorisiert schwenkbare Anzieleinheit (20) mit einer Teleskopeinheit zur Emission der
Messstrahlung (17, 21) und zum Empfang von zumindest einem Teil der am Ziel (29c, 65, 81) reflektierten Messstrahlung (17, 21).

10. Verfahren zum Suchen eines Ziels (29c, 65, 81) mit einem Lasertracker (10, 11, 12), wobei der
Lasertracker (10, 11, 12) aufweist
• eine eine Stehachse (41) definierende Basis (40),
• eine Strahllenkeinheit zum Emittieren einer Messstrahlung (17, 21) und zum Empfangen von zumindest einem Teil der am Ziel (29c, 65, 81) reflektierten Messstrahlung (17, 21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17, 21) eine Messachse (57) definiert ist, und
• einen - an den Messstrahlengang gekoppelten sowie einen im Gegensatz zu einer ersten und zweiten Kamera (24, 24a, 24b, 60a, 60b) engen Sichtbereich aufweisenden - positionssensitiven Detektor (58) zur Feinanzielung und Verfolgung des Ziels (29c, 65, 81) mittels Detektion von am Ziel (29c, 65, 81) reflektierter Messstrahlung (17, 21),
wobei das Verfahren erfolgt mit
• einem Beleuchten des Ziels (29c, 65, 81) mit elektromagnetischer Beleuchtungsstrahlung,
• einem positionssensitiven Erfassen eines ersten Bildes mit der ersten am Lasertracker (10, 11, 12) angeordneten und ein erstes Sichtfeld (27a) definierenden Kamera (24, 24a, 60a), wobei die erste Kamera (24, 24a, 60a) mit deren optischer Achse (26a) versetzt zur Messachse (57) angeordnet ist,
• einem ersten Bestimmen von zumindest einem Teil der am Ziel (29c, 65, 81) reflektierten Beleuchtungsstrahlung als erste Zielposition (29a) im ersten Bild,
• einem positionssensitiven Erfassen eines zweiten Bildes mit der zweiten am Lasertracker (10, 11, 12) angeordneten und ein zweites Sichtfeld (27a) definierenden Kamera (24, 24b, 60b), wobei die zweite Kamera (24, 24b, 60b)
mit deren optischer Achse (26b) versetzt zur Messachse (57) angeordnet ist sowie
□ mit relativ zur ersten Kamera (24, 24a, 60a) und zur Messachse (57) bekannter und fixer Positionierung und Ausrichtung angeordnet ist und dabei die erste und zweite Kamera (24, 24a, 24b, 60a, 60b) derart angeordnet sind, dass die Sichtfelder (27a, 27b) der ersten und zweiten Kamera (24, 24a, 24b, 60a, 60b) zumindest teilweise überlappen,
• einem zweiten Bestimmen von zumindest einem Teil der am Ziel (29c, 65, 81) reflektierten Beleuchtungsstrahlung als zweite Zielposition (29b) im zweiten Bild, und
• einem Auffinden des Ziels (29c, 65, 81) in Abhängigkeit von einer Zusammenschau der ersten und zweiten Zielposition (29a, 29b) mit einem basierend darauf erfolgenden automatischen Ausrichten der Messstrahlung (17, 21) auf das Ziel (29c, 65, 81) durch Steuern der Strahllenkeinheit,
wobei
die Positionierung und Ausrichtung der ersten und zweiten Kamera (24, 24a, 24b, 60a, 60b) relativ zueinander und relativ zur Messachse (57) kalibriert wird indem
• das Ziel (29c, 65, 81) in verschiedenen Positionen bereitgestellt und mittels der Messstrahlung (17, 21) angezielt und vermessen wird,
• für jede Position des Ziels (29c, 65, 81) die erste und zweite Zielposition (29a-b) bestimmt wird und
• aus dem Vermessen des Ziels (29c, 65, 81) und den dazu bestimmten Zielpositionen (29a-b) die relative Positionierung und Ausrichtung abgeleitet wird.

11. Verfahren zum Suchen eines Ziels (29c, 65, 81) mit einem Lasertracker (10, 11, 12), wobei der Lasertracker (10, 11, 12) aufweist
• eine eine Stehachse (41) definierende Basis (40),
• eine Strahllenkeinheit zum Emittieren einer Messstrahlung (17, 21) und zum Empfangen von zumindest einem Teil der am Ziel (29c, 65, 81) reflektierten Messstrahlung (17, 21), wobei
□ die Strahllenkeinheit um die Stehachse (41) und eine Neigungsachse (31) relativ zur Basis (40) motorisiert schwenkbar ist und
□ durch eine Emissionsrichtung der Messstrahlung (17, 21) eine Messachse (57) definiert ist, und
• einen - an den Messstrahlengang gekoppelten sowie einen im Gegensatz zu einer ersten und zweiten Kamera (24, 24a, 24b, 60a, 60b) engen Sichtbereich aufweisenden - positionssensitiven Detektor (58) zur Feinanzielung und Verfolgung des Ziels (29c, 65, 81) mittels Detektion von am Ziel (29c, 65, 81) reflektierter Messstrahlung (17, 21),
wobei das Verfahren erfolgt mit
• einem Beleuchten des Ziels (29c, 65, 81) mit elektromagnetischer Beleuchtungsstrahlung,
• einem positionssensitiven Erfassen eines ersten Bildes mit einer ersten am Lasertracker (10, 11, 12) angeordneten und ein erstes Sichtfeld (27a) definierenden Kamera (24, 24a, 60a), wobei die erste Kamera (24, 24a, 60a) mit deren optischer Achse (26a) versetzt zur Messachse (57) angeordnet ist,
• einem ersten Bestimmen von zumindest einem Teil der am Ziel (29c, 65, 81) reflektierten Beleuchtungsstrahlung als erste Zielposition (29a) im ersten Bild,
• einem positionssensitiven Erfassen eines zweiten Bildes mit einer zweiten am Lasertracker (10, 11, 12) angeordneten und ein zweites Sichtfeld (27a) definierenden Kamera (24, 24b, 60b), wobei die zweite Kamera (24, 24b, 60b)
□ mit deren optischer Achse (26b) versetzt zur Messachse (57) angeordnet ist sowie
□ mit relativ zur ersten Kamera (24, 24a, 60a) und zur Messachse (57) bekannter und fixer Positionierung und Ausrichtung angeordnet ist und dabei die erste und zweite Kamera (24, 24a, 24b, 60a, 60b) derart angeordnet sind, dass die Sichtfelder (27a, 27b) der ersten und zweiten Kamera (24, 24a, 24b, 60a, 60b) zumindest teilweise überlappen,
• einem zweiten Bestimmen von zumindest einem Teil der am Ziel (29c, 65, 81) reflektierten Beleuchtungsstrahlung als zweite Zielposition (29b) im zweiten Bild, und
• einem Auffinden des Ziels (29c, 65, 81) in Abhängigkeit von einer Zusammenschau der ersten und zweiten Zielposition (29a, 29b) mit einem basierend darauf erfolgenden automatischen Ausrichten der Messstrahlung (17, 21) auf das Ziel (29c, 65, 81) durch Steuern der Strahllenkeinheit,
wobei
• die erste und die zweite Zielposition (29a-b) im ersten und zweiten Bild mittels Bildverarbeiten derart bestimmt werden, dass im jeweiligen Bild mittels Helligkeits- und/oder Kontrastanalyse eine Form des Strahlungsquerschnitts der am Ziel (29c, 65, 81) reflektierten und im Bild erfassten Beleuchtungsstrahlung bestimmt wird, und mittels Schwerpunktberechnens basierend auf der im jeweiligen Bild erfassten Form die erste und zweite Zielposition (29a-b) bestimmt werden, welche jeweils die Lage der im Bild erfassten Beleuchtungsstrahlung im jeweiligen Bild repräsentieren.

12. Verfahren nach Anspruch 11,
**dadurch gekennzeichnet, dass**
das Bestimmen der ersten und die zweiten Zielposition (29a-b) jeweils erfolgt
• mittels Matchen, insbesondere In-Übereinstimmung-Bringen, der im jeweiligen Bild erfassten Form mit einem gespeicherten Muster anhand einer Best-Fit-Methode, insbesondere mit Subbildpunktgenauigkeit, wobei anhand der in Übereinstimmung gebrachten Lage des Musters im Bild die jeweilige Zielposition (29ab) der im Bild erfassten Beleuchtungsstrahlung bestimmt wird, insbesondere mit Subbildpunktgenauigkeit.

13. Verfahren nach einem der Ansprüche 10 bis 12,
**dadurch gekennzeichnet, dass**
Vieldeutigkeiten, die bei einem Heranziehen von nur der ersten Zielposition (29a) zum Auffinden des Ziels (29c, 65, 81) und durch eine durch die Messachse (57) und die optischen Achsen (26a, 26b) der ersten und zweiten Kamera (24, 24a, 24b, 60a, 60b) gegebene Parallaxe vorhanden sind, durch ein gemeinsames Heranziehen von sowohl der ersten als auch der zweiten Zielposition (29a, 29b) aufgelöst werden.

14. Verfahren nach einem der Ansprüche 10 bis 13,
**dadurch gekennzeichnet, dass**
in Abhängigkeit von der ersten und zweiten Zielposition (29a,29b) eine Grobentfernung zum Ziel (29c, 65, 81) bestimmt wird,
insbesondere wobei
in Abhängigkeit von der ersten und zweiten Zielposition (29a, 29b) jeweils eine
Zielrichtung (63a,63b) zum Ziel (29c, 65, 81) abgeleitet und in Abhängigkcit von den Zielrichtungen (63a,63b) eine Grobposition des Ziels (29c,65,81) bestimmt wird, insbesondere mittels Photogrammetrie.

15. Computerprogrammprodukt mit Programmcode, der auf einem maschinenlesbaren Träger gespeichert ist, zur Steuerung bzw. Durchführung des Verfahrens nach einem der Ansprüche 10 bis 14.

## Claims

1. Laser tracker (10, 11, 12) for the progressive tracking of a reflective target (29c, 65, 81) and for determining the position of the target (29c, 65, 81) having
• a base (40) which defines a standing axis (41),
• a beam guiding unit for emitting measuring radiation (17, 21) and for receiving at least a part of the measuring radiation (17, 21) reflected on the target (29c, 65, 81), wherein
□ the beam guiding unit is pivotable by a motor about the standing axis (41) and an inclination axis (31) in relation to the base (40) and
□ a measuring axis (57) is defined by an emission direction of the measuring radiation (17, 21),
• a fine distance measuring unit for precisely determining the distance to the target (29c, 65, 81) by means of the measuring radiation (17, 21),
• an angle measuring functionality for determining an alignment of the beam guiding unit in relation to the base (40),
• a target search unit having
□ illumination means (25) for illuminating the target (29c, 65, 81) using electromagnetic illumination radiation,
□ a first camera (24, 24a, 60a), which defines a first field of vision (27a), having a first position-sensitive detector (28a), wherein
• a first image can be acquired using the first camera (24, 24a, 60a) and at least a part of the illumination radiation reflected on the target (29c, 65, 81) can be determined in the first image as a first target position (29a) and
• the first camera (24, 24a, 60a) is arranged having its optical axis (26a) offset to the measuring axis (57), and
□ a second camera (24, 24b, 60b), which defines a second field of vision (27b), having a second position-sensitive detector (28b), wherein
□ a second image can be acquired using the second camera (24, 24b, 60b) and at least a part of the illumination radiation reflected on the target (29c, 65, 81) can be determined in the second image as a second target position (29b),
□ the second camera (24, 24b, 60b) is arranged having its optical axis (26b) offset to the measuring axis (57) and
□ the second camera (24, 24b, 60b) is arranged having fixed positioning and alignment, which are known in relation to the first camera (24, 24a, 60a) and to the measuring axis (57), and the first and the second camera (24, 24a, 24b, 60a, 60b) are arranged here such that the fields of vision (27a, 27b) of the first and the second camera (24, 24a, 24b, 60a, 60b) at least partially overlap and
• a position-sensitive detector (58) - coupled to the measuring beam path and having a narrow range of vision in contrast to the first and the second camera (24, 24a, 24b, 60a, 60b) - for the fine targeting and tracking of the target (29c, 65, 81) by means of detection of measuring radiation (17, 21) reflected on the target (29c, 65, 81),
wherein
• within the scope of the target search unit there is a control and analysis unit configured such that, upon execution of a search functionality, a finding of the target (29c, 65, 81) is performed as a function of an integrated consideration of the first and the second target position (29a, 29b) and, on that basis, the measuring radiation (17, 21) is automatically aligned on the target (29c, 65, 81) by means of controlling the beam guiding unit, so that the measuring radiation (17, 21) is incident on the target (29c, 65, 81) and the distance to the target (29c, 65, 81) can be precisely determined by means of the fine distance measuring unit,
**characterized in that**
• the laser tracker (10, 11, 12) has a calibration function, upon the execution of which the known positioning and alignment of the first and the second camera (24, 24a, 24b, 60a, 60b) in relation to one another and in relation to the measuring axis (57) are determined, wherein in the scope of the calibration function
□ the target (29c, 65, 81) - under provision of the target in various positions - is targeted and surveyed by means of the measuring radiation (17, 21) in the various positions,
□ the first and second target positions (29a-b) are determined for each position of the target (29c, 65, 81), and
□ the relative positioning and alignment are derived from the surveying of the target (29c, 65, 81) and the target positions (29a-b) determined thereto.

2. Laser tracker (10, 11, 12) for the progressive tracking of a reflective target (29c, 65, 81) and for determining the position of the target (29c, 65, 81) having
• a base (40) which defines a standing axis (41),
• a beam guiding unit for emitting measuring radiation (17, 21) and for receiving at least a part of the measuring radiation (17, 21) reflected on the target (29c, 65, 81), wherein
□ the beam guiding unit is pivotable by a motor about the standing axis (41) and an inclination axis (31) in relation to the base (40) and
□ a measuring axis (57) is defined by an emission direction of the measuring radiation (17, 21),
• a fine distance measuring unit for precisely determining the distance to the target (29c, 65, 81) by means of the measuring radiation (17, 21),
• an angle measuring functionality for determining an alignment of the beam guiding unit in relation to the base (40),
• a target search unit having
□ illumination means (25) for illuminating the target (29c, 65, 81) using electromagnetic illumination radiation,
□ a first camera (24, 24a, 60a), which defines a first field of vision (27a), having a first position-sensitive detector (28a), wherein
• a first image can be acquired using the first camera (24, 24a, 60a) and at least a part of the illumination radiation reflected on the target (29c, 65, 81) can be determined in the first image as a first target position (29a) and
• the first camera (24, 24a, 60a) is arranged having its optical axis (26a) offset to the measuring axis (57), and
□ a second camera (24, 24b, 60b), which defines a second field of vision (27b), having a second position-sensitive detector (28b), wherein
• a second image can be acquired using the second camera (24, 24b, 60b) and at least a part of the illumination radiation reflected on the target (29c, 65, 81) can be determined in the second image as a second target position (29b),
• the second camera (24, 24b, 60b) is arranged having its optical axis (26b) offset to the measuring axis (57) and
• the second camera (24, 24b, 60b) is arranged having fixed positioning and alignment, which are known in relation to the first camera (24, 24a, 60a) and to the measuring axis (57), and the first and the second camera (24, 24a, 24b, 60a, 60b) are arranged here such that the fields of vision (27a, 27b) of the first and the second camera (24, 24a, 24b, 60a, 60b) at least partially overlap and
• a position-sensitive detector (58) - coupled to the measuring beam path and having a narrow range of vision in contrast to the first and the second camera (24, 24a, 24b, 60a, 60b) - for the fine targeting and tracking of the target (29c, 65, 81) by means of detection of measuring radiation (17, 21) reflected on the target (29c, 65, 81),
wherein
• within the scope of the target search unit there is a control and analysis unit configured such that, upon execution of a search functionality, a finding of the target (29c, 65, 81) is performed as a function of an integrated consideration of the first and the second target position (29a, 29b) and, on that basis, the measuring radiation (17, 21) is automatically aligned on the target (29c, 65, 81) by means of controlling the beam guiding unit, so that the measuring radiation (17, 21) is incident on the target (29c, 65, 81) and the distance to the target (29c, 65, 81) can be precisely determined by means of the fine distance measuring unit,
**characterized in that**
• the control and analysis unit has a target positioning determination functionality, in the execution of which the first and the second target position (29a-b) in the first and second image are determined by means of image processing such that a shape of the radiation cross section of the illumination radiation reflected on the target (29c, 65, 81) and acquired in the image is determined in the respective image by means of brightness and/or contrast analysis, and the first and the second target position (29a-b), which respectively represent the location of the illumination radiation acquired in the image in the respective image are determined by means of focal point calculation based on the shape acquired in the respective image.

3. Laser tracker (10, 11, 12) according to Claim 2, **characterized in that** the target position determination functionality is configured in such a way that the first and second target position (29a-b) are determined
• by means of matching, in particular bringing into correspondence, of the shape acquired in the respective image with a stored pattern on the basis of a best fit method, in particular with subpixel precision, wherein the respective target position (29a-b) of the illumination radiation acquired in the image is determined on the basis of the location of the pattern in the image which is brought into correspondence, in particular with subpixel precision.

4. Laser tracker (10, 11, 12) according to any one of Claims 1 to 3, **characterized in that** the control and analysis unit is configured such that upon execution of the search functionality, ambiguities, which are present upon a use of only the first target position (29a) for finding the target (29c, 65, 81) and by way of a parallax provided by the measuring axis (57) and the optical axes (26a, 26b) of the first and second camera (24, 24a, 24b, 60a, 60b), are resolved by a mutual use of both the first and also the second target position (29a, 29b) for finding the target (29c, 65, 81).

5. Laser tracker (10, 11, 12) according to any one of Claims 1 to 4,
**characterized in that** the control and analysis unit is configured such that upon execution of the search functionality, a coarse distance to the target (29c, 65, 81) is determined as a function of the first and second target position (29a, 29b), in particular wherein the control and analysis unit is configured such that upon execution of the search functionality, respectively a target direction (63a, 63b) to the target (29c, 65, 81) is derived as a function of the first and second target position (29a, 29b), and a coarse position is determined as a function of the target directions (63a, 63b), in particular by means of photogrammetry.

6. Laser tracker according to any one of Claims 1 to 5,
**characterized in that** the first and second camera (24, 24a, 24b, 60a, 60b) are arranged such that
• the measuring axis (57) lies at least partially in an overlap region (28) defined by the overlapping fields of vision (27a, 27b) of the first and second camera (24, 24a, 24b, 60a, 60b),
• their optical axes (26a, 26b) are respectively arranged
• offset in parallel to the measuring axis (57) or
• at a defined angle in relation to the measuring axis (57),
and/or
• the first and second camera (24, 24a, 24b, 60a, 60b) are arranged axially-symmetrical in relation to the measuring axis (57).

7. Laser tracker (10, 11, 12) according to any one of Claims 1 to 6,
**characterized in that** the illumination means (25) are implemented such that the electromagnetic illumination radiation can be emitted divergently having a wavelength in the infrared range, in particular wherein the first and second camera (24, 24a, 24b, 60a, 60b) are implemented such that essentially only infrared illumination radiation can be acquired, in particular wherein the first and second camera (24, 24a, 24b, 60a, 60b) each have a filter unit for essentially exclusive transmission of the infrared radiation to the respective position-sensitive detector (28a-b).

8. Laser tracker (10, 11, 12) according to any one of Claims 1 to 7,
**characterized in that** the laser tracker (10, 11, 12) has a third or multiple cameras (24) having a third or multiple position-sensitive detectors for acquiring a third or multiple target positions, wherein the third or multiple cameras (24) are arranged such that a third or multiple optical axes of the third or multiple cameras are arranged offset to the measuring axis (57), and the control and analysis unit is configured such that upon execution of the search functionality, the searching for the target (29c, 65, 81) is performed as a function of the three or more target positions, in particular wherein at least one of the cameras (24) is implemented to acquire electromagnetic radiation in a defined range around an illumination wavelength of the illumination radiation.

9. Laser tracker (10, 11, 12) according to any one of claims 1 to 8,
**characterized in that** the laser tracker (10, 11, 12) has
• a support (30), which is pivotable by a motor about the standing axis (41) in relation to the base (40) and defines the inclination axis (31), and
• a targeting unit (20), which is implemented as a beam guiding unit and is pivotable by a motor about the inclination axis (31) in relation to the support (30), having a telescope unit for emitting the measuring radiation (17, 21) and for receiving at least a part of the measuring radiation (17, 21) reflected on the target (29c, 65, 81).

10. Method for searching for a target (29c, 65, 81) using a laser tracker (10, 11, 12), wherein the laser tracker (10, 11, 12) has
• a base (40) which defines a standing axis (41),
• a beam guiding unit for emitting measuring radiation (17, 21) and for receiving at least a part of the measuring radiation (17, 21) reflected on the target (29c, 65, 81), wherein
□ the beam guiding unit is pivotable by a motor about the standing axis (41) and an inclination axis (31) in relation to the base (40) and
□ a measuring axis (57) is defined by an emission direction of the measuring radiation (17, 21), and
• a position-sensitive detector (58) - coupled to the measuring beam path and having a narrow range of vision in contrast to a first and a second camera (24, 24a, 24b, 60a, 60b) - for the fine targeting and tracking of the target (29c, 65, 81) by means of detection of measuring radiation (17, 21) reflected on the target (29c, 65, 81), wherein the method is performed using
• an illumination of the target (29c, 65, 81) using electromagnetic illumination radiation,
• a position-sensitive acquisition of a first image using the first camera (24, 24a, 60a), which is arranged on the laser tracker (10, 11, 12) and defines a first field of vision (27a), wherein the first camera (24, 24a, 60a) is arranged having its optical axis (26a) offset to the measuring axis (57),
• a first determination of at least a part of the illumination radiation reflected on the target (29c, 65, 81) as a first target position (29a) in the first image,
• a position-sensitive acquisition of a second image using the second camera (24, 24b, 60b), which is arranged on the laser tracker (10, 11, 12) and defines a second field of vision (27a), wherein the second camera (24, 24b, 60b)
□ is arranged having its optical axis (26b) offset to the measuring axis and
□ is arranged having fixed positioning and alignment, which are known in relation to the first camera (24, 24a, 60a) and to the measuring axis (57), and the first and the second camera (24, 24a, 24b, 60a, 60b) are arranged here such that the fields of view (27a, 27b) of the first and the second camera (24, 24a, 24b, 60a, 60b) at least partially overlap,
• a second determination of at least a part of the illumination radiation reflected on the target (29c, 65, 81) as a second target position (29b) in the second image, and
• finding of the target (29c, 65, 81) as a function of an integrated consideration of the first and the second target position (29a, 29b) with an occurring automatic alignment based thereon of the measuring radiation (17, 21) to the target (29c, 65, 81) by controlling the beam guiding unit,
wherein the positioning and alignment of the first and the second camera (24, 24a, 24b, 60a, 60b) in relation to one another and in relation to the measuring axis (57) are calibrated in that
• the target (29c, 65, 81) is provided in various positions and is targeted and surveyed by means of the measuring radiation (17, 21),
• the first and the second target position (29a-b) are determined for each position of the target (29c, 65, 81), and
• the relative positioning and alignment are derived from the surveying of the target (29c, 65, 81) and the target positions (29a-b) determined thereto.

11. Method for searching for a target (29c, 65, 81) using a laser tracker (10, 11, 12), wherein the laser tracker (10, 11, 12) has
• a base (40) which defines a standing axis (41),
• a beam guiding unit for emitting measuring radiation (17, 21) and for receiving at least a part of the measuring radiation (17, 21) reflected on the target (29c, 65, 81), wherein
□ the beam guiding unit is pivotable by a motor about the standing axis (41) and an inclination axis (31) in relation to the base (40) and
□ a measuring axis (57) is defined by an emission direction of the measuring radiation (17, 21), and
• a position-sensitive detector (58) - coupled to the measuring beam path and having a narrow range of vision in contrast to a first and a second camera (24, 24a, 24b, 60a, 60b) - for the fine targeting and tracking of the target (29c, 65, 81) by means of detection of measuring radiation (17, 21) reflected on the target (29c, 65, 81),
wherein the method is performed using
• an illumination of the target (29c, 65, 81) using electromagnetic illumination radiation,
• a position-sensitive acquisition of a first image using the first camera (24, 24a, 60a), which is arranged on the laser tracker (10, 11, 12) and defines a first field of vision (27a), wherein the first camera (24, 24a, 60a) is arranged having its optical axis (26a) offset to the measuring axis (57),
• a first determination of at least a part of the illumination radiation reflected on the target (29c, 65, 81) as a first target position (29a) in the first image,
• a position-sensitive acquisition of a second image using the second camera (24, 24b, 60b), which is arranged on the laser tracker (10, 11, 12) and defines a second field of vision (27a), wherein the second camera (24, 24b, 60b)
□ is arranged having its optical axis (26b) offset to the measuring axis and
□ is arranged having fixed positioning and alignment, which are known in relation to the first camera (24, 24a, 60a) and to the measuring axis (57), and the first and the second camera (24, 24a, 24b, 60a, 60b) are arranged here such that the fields of view (27a, 27b) of the first and the second camera (24, 24a, 24b, 60a, 60b) at least partially overlap,
• a second determination of at least a part of the illumination radiation reflected on the target (29c, 65, 81) as a second target position (29b) in the second image, and
• finding of the target (29c, 65, 81) as a function of an integrated consideration of the first and the second target position (29a, 29b) with an occurring automatic alignment based thereon of the measuring radiation (17, 21) to the target (29c, 65, 81) by controlling the beam guiding unit,
wherein
• the first and the second target position (29a-b) in the first and the second image are determined by means of image processing such that a shape of the radiation cross section of the illumination radiation reflected on the target (29c, 65, 81) and acquired in the image is determined in the respective image by means of brightness and/or contrast analysis, and the first and the second target position (29a-b), which respectively represent the location of the illumination radiation acquired in the image in the respective image are determined by means of focal point calculation based on the shape acquired in the respective image.

12. Method according to Claim 11,
**characterized in that** the determination of the first and second target position (29a-b) is respectively perfomed
• by means of matching, in particular bringing into correspondence, of the shape acquired in the respective image with a stored pattern on the basis of a best fit method, in particular with subpixel precision, wherein the respective target position (29a-b) of the illumination radiation acquired in the image is determined on the basis of the location of the pattern in the image which is brought into correspondence, in particular with subpixel precision.

13. Method according to any one of Claims 10 to 12,
**characterized in that** ambiguities, which are present upon a use of only the first target position (29a) for finding the target (29c, 65, 81) and by way of a parallax provided by the measuring axis (57) and the optical axes (26a, 26b) of the first and second camera (24, 24a, 24b, 60a, 60b), are resolved by a mutual use of both the first and also the second target position (29a, 29b).

14. Method according to any one of Claims 10 to 13,
**characterized in that** a coarse distance to the target (29c, 65, 81) is determined as a function of the first and the second target position (29a, 29b), in particular wherein respectively a target direction (63a, 63b) to the target (29c, 65, 81) is derived as a function of the first and the second target position (29a, 29b), and a coarse position of the target (29c, 65, 81) is determined as a function of the target directions (63a, 63b), in particular by means of photogrammetry.

15. Computer program product having program code which is stored on a machine-readable carrier, for controlling or carrying out the method according to any one of Claims 10 to 14.

## Revendications

1. Appareil de suivi laser (10, 11, 12) destiné à suivre en continu une cible (29c, 65, 81) réfléchissante et à définir la position de la cible (29c, 65, 81), avec
• une base (40) définissant un axe vertical (41),
• une unité de guidage de faisceau destinée à l'émission d'un rayonnement de mesure (17, 21) et à la réception d'au moins une partie du rayonnement de mesure (17, 21) réfléchi sur la cible (29c, 65, 81),
□ l'unité de guidage de faisceau pouvant pivoter de façon motorisée autour de l'axe vertical (41) et d'un axe d'inclinaison (31) relativement à la base (40), et
□ un axe de mesure (57) étant défini par une direction d'émission du rayonnement de mesure (17, 21),
• une unité de mesure de distance fine destinée à la définition précise de distance à la cible (29c, 65, 81) au moyen du rayonnement de mesure (17, 21),
• une fonctionnalité de mesure angulaire destinée à la définition d'une orientation de l'unité de guidage de faisceau relativement à la base (40),
• une unité de recherche de cible avec
□ des moyens d'éclairage (25) destinés à l'éclairage de la cible (29c, 65, 81) avec un rayonnement d'éclairage électromagnétique,
□ une première caméra (24, 24a, 60a), définissant un premier champ de vision (27a), avec un premier détecteur (28a) sensible à la position,
• une première image pouvant être détectée avec la première caméra (24, 24a, 60a) et, dans la première image, au moins une partie du rayonnement d'éclairage réfléchi sur la cible (29c, 65, 81) pouvant être définie en tant que première position de cible (29a), et
• la première caméra (24, 24a, 60a) étant, avec son axe optique (26a), disposée de façon décalée par rapport à l'axe de mesure (57), et
□ une deuxième caméra (24, 24b, 60b) définissant un deuxième champ de vision (27b), avec un deuxième détecteur (28b) sensible à la position,
• une deuxième image pouvant être détectée avec la deuxième caméra (24, 24b, 60b) et, dans la deuxième image, au moins une partie du rayonnement d'éclairage réfléchi sur la cible (29c, 65, 81) pouvant être définie en tant que deuxième position de cible (29b),
• la deuxième caméra (24, 24b, 60b) étant, avec son axe optique (26b), disposée de façon décalée par rapport à l'axe de mesure (57), et
• la deuxième caméra (24, 24b, 60b) étant disposée avec un positionnement et une orientation connus et fixes relativement à la première caméra (24, 24a, 60a) et à l'axe de mesure (57), de même que la première et la deuxième caméra (24, 24a, 24b, 60a, 60b) sont en l'occurrence disposées de telle sorte que les champs de vision (27a, 27b) de la première et de la deuxième caméra (24, 24a, 24b, 60a, 60b) se chevauchent au moins partiellement,
et
• un détecteur (58) sensible à la position - couplé au trajet du rayon de mesure, de même que présentant un champ de vision étroit contrairement à la première et à la deuxième caméra (24, 24a, 24b, 60a, 60b) - destiné à la visée fine et au suivi de la cible (29c, 65, 81) au moyen de la détection du rayonnement de mesure (17, 21) réfléchi sur la cible (29c, 65, 81),
une unité de commande et d'analyse étant présente dans le cadre de l'unité de recherche de cible et configurée de telle sorte que, lors de l'exécution d'une fonctionnalité de recherche, une localisation de la cible (29c, 65, 81) est effectuée en fonction d'une conjonction de la première et de la deuxième position de cible (29a, 29b) et, sur cette base, le rayonnement de mesure (17, 21) est, par la commande de l'unité de guidage de faisceau, orienté automatiquement vers la cible (29c, 65, 81) de telle sorte que le rayonnement de mesure (17, 21) atteint la cible (29c, 65, 81) et, au moyen de l'unité de mesure de distance fine, la distance à la cible (29c, 65, 81) peut être définie de façon précise,
**caractérisé en ce que**
• l'appareil de suivi laser (10, 11, 12) présente une fonction d'étalonnage, lors de l'exécution de laquelle le positionnement et l'orientation connus de la première et de la deuxième caméra (24, 24a, 24b, 60a, 60b) relativement l'une à l'autre et relativement à l'axe de mesure (57) sont définis,
□ la cible (29c, 65, 81), dans le cadre de la fonction d'étalonnage, étant - avec la fourniture de la cible dans différentes positions - visée et mesurée au moyen du rayonnement de mesure (17, 21) dans les différentes positions,
□ la première et la deuxième position de cible (29a-b) étant définies pour chaque position de la cible (29c, 65, 81), et
□ le positionnement et l'orientation relatifs étant dérivés de la mesure de la cible (29c, 65, 81) et des positions de cible (29a-b) définies pour cela.

2. Appareil de suivi laser (10, 11, 12) destiné à suivre en continu une cible (29c, 65, 81) réfléchissante et à définir la position de la cible (29c, 65, 81), avec
• une base (40) définissant un axe vertical (41),
• une unité de guidage de faisceau destinée à l'émission d'un rayonnement de mesure (17, 21) et à la réception d'au moins une partie du rayonnement de mesure (17, 21) réfléchi sur la cible (29c, 65, 81),
□ l'unité de guidage de faisceau pouvant pivoter de façon motorisée autour de l'axe vertical (41) et d'un axe d'inclinaison (31) relativement à la base (40), et
□ un axe de mesure (57) étant défini par une direction d'émission du rayonnement de mesure (17, 21),
• une unité de mesure de distance fine destinée à la définition précise de distance à la cible (29c, 65, 81) au moyen du rayonnement de mesure (17, 21),
• une fonctionnalité de mesure angulaire destinée à la définition d'une orientation de l'unité de guidage de faisceau relativement à la base (40),
• une unité de recherche de cible avec
□ des moyens d'éclairage (25) destinés à l'éclairage de la cible (29c, 65, 81) avec un rayonnement d'éclairage électromagnétique,
□ une première caméra (24, 24a, 60a), définissant un premier champ de vision (27a), avec un premier détecteur (28a) sensible à la position,
• une première image pouvant être détectée avec la première caméra (24, 24a, 60a) et, dans la première image, au moins une partie du rayonnement d'éclairage réfléchi sur la cible (29c, 65, 81) pouvant être définie en tant que première position de cible (29a), et
• la première caméra (24, 24a, 60a) étant, avec son axe optique (26a), disposée de façon décalée par rapport à l'axe de mesure (57), et
□ une deuxième caméra (24, 24b, 60b) définissant un deuxième champ de vision (27b), avec un deuxième détecteur (28b) sensible à la position,
• une deuxième image pouvant être détectée avec la deuxième caméra (24, 24b, 60b) et, dans la deuxième image, au moins une partie du rayonnement d'éclairage réfléchi sur la cible (29c, 65, 81) pouvant être définie en tant que deuxième position de cible (29b),
• la deuxième caméra (24, 24b, 60b) étant, avec son axe optique (26b), disposée de façon décalée par rapport à l'axe de mesure (57), et
• la deuxième caméra (24, 24b, 60b) étant disposée avec un positionnement et une orientation connus et fixes relativement à la première caméra (24, 24a, 60a) et à l'axe de mesure (57), de même que la première et la deuxième caméra (24, 24a, 24b, 60a, 60b) sont en l'occurrence disposées de telle sorte que les champs de vision (27a, 27b) de la première et de la deuxième caméra (24, 24a, 24b, 60a, 60b) se chevauchent au moins partiellement,
et
• un détecteur (58) sensible à la position - couplé au trajet du rayon de mesure et présentant un champ de vision étroit contrairement à la première et à la deuxième caméra (24, 24a, 24b, 60a, 60b) - destiné à la visée fine et au suivi de la cible (29c, 65, 81) au moyen de la détection du rayonnement de mesure (17, 21) réfléchi sur la cible (29c, 65, 81),
une unité de commande et d'analyse étant présente dans le cadre de l'unité de recherche de cible et configurée de telle sorte que, lors de l'exécution d'une fonctionnalité de recherche, une localisation de la cible (29c, 65, 81) est effectuée en fonction d'une conjonction de la première et de la deuxième position de cible (29a, 29b) et, sur cette base, le rayonnement de mesure (17, 21) est, par la commande de l'unité de guidage de faisceau, orienté automatiquement vers la cible (29c, 65, 81) de telle sorte que le rayonnement de mesure (17, 21) atteint la cible (29c, 65, 81) et, au moyen de l'unité de mesure de distance fine, la distance à la cible (29c, 65, 81) peut être définie de façon précise,
**caractérisé en ce que**
• l'unité de commande et d'analyse présente une fonctionnalité de définition de position de cible lors de l'exécution de laquelle la première et la deuxième position de cible (29a-b) sont définies dans la première et la deuxième image au moyen d'un traitement d'image de telle sorte que, dans l'image respective, au moyen d'une analyse de brillance et/ou de contraste, une forme de la section transversale de rayonnement du rayonnement d'éclairage réfléchi sur la cible (29c, 65, 81) et détecté dans l'image est définie et, au moyen d'un calcul du centre de gravité basé sur la forme détectée dans l'image respective, la première et la deuxième position de cible (29a-b) sont définies, lesquelles représentent respectivement l'emplacement du rayonnement d'éclairage détecté dans l'image respective.

3. Appareil de suivi laser (10, 11, 12) selon la revendication 2,
**caractérisé en ce que**
la fonctionnalité de définition de position de cible est configurée de telle sorte que la première et la deuxième position de cible (29a-b) sont définies
• au moyen d'une correspondance, en particulier d'une mise en coïncidence, de la forme détectée dans l'image respective avec un échantillon enregistré à l'aide d'un procédé best-fit, en particulier avec une précision de sous-pixel, la position de cible (29a-b) respective du rayonnement d'éclairage détecté dans l'image étant définie, en particulier avec une précision de sous-pixel, à l'aide de l'emplacement, mis en coïncidence, de l'échantillon dans l'image.

4. Appareil de suivi laser (10, 11, 12) selon l'une des revendications 1 à 3,
**caractérisé en ce que**
l'unité de commande et d'analyse est configurée de telle sorte que, lors de l'exécution de la fonctionnalité de recherche, des ambiguïtés qui sont présentes lors d'une utilisation de seulement la première position de cible (29a) pour la localisation de la cible (29c, 65, 81) et du fait d'une parallaxe donnée par l'axe de mesure (57) et les axes optiques (26a, 26b) de la première et de la deuxième caméra (24, 24a, 24b, 60a, 60b), sont levées par une utilisation commune aussi bien de la première que de la deuxième position de cible (29a, 29b) pour la localisation de la cible (29c, 65, 81).

5. Appareil de suivi laser (10, 11, 12) selon l'une des revendications 1 à 4,
**caractérisé en ce que**
l'unité de commande et d'analyse est configurée de telle sorte que, lors de l'exécution de la fonctionnalité de recherche, en fonction de la première et de la deuxième position de cible (29a-b), une distance grossière à la cible (29c, 65, 81) est définie,
l'unité de commande et d'analyse étant en particulier configurée de telle sorte que, lors de l'exécution de la fonctionnalité de recherche, une direction de cible (63a, 63b) vers la cible est respectivement dérivée en fonction de la première et de la deuxième position de cible (29a-b), et une position grossière est définie en fonction des directions de cible (63a, 63b), en particulier au moyen de la photogrammétrie.

6. Appareil de suivi laser (10, 11, 12) selon l'une des revendications 1 à 5,
**caractérisé en ce que**
la première et la deuxième caméra (24, 24a, 24b, 60a, 60b) sont disposées de telle sorte que
• l'axe de mesure (57) est situé au moins partiellement dans une zone de chevauchement (28) définie par les champs de vision (27a, 27b) se chevauchant de la première et de la deuxième caméra (24, 24a, 24b, 60a, 60b), et/ou
• leurs axes optiques (26a, 26b) sont respectivement disposés
□ avec un décalage parallèle par rapport à l'axe de mesure (57) ou
□ en formant un angle défini relativement à l'axe de mesure (57),
et/ou
• la première et la deuxième caméra (24, 24a, 24b, 60a, 60b) sont disposées avec une symétrie axiale relativement à l'axe de mesure (57).

7. Appareil de suivi laser (10, 11, 12) selon l'une des revendications 1 à 6,
**caractérisé en ce que**
les moyens d'éclairage (25) sont constitués de telle sorte que le rayonnement d'éclairage électromagnétique peut être émis de façon divergente avec une longueur d'onde dans le domaine infrarouge,
la première et la deuxième caméra (24, 24a, 24b, 60a, 60b) étant en particulier constituées de telle sorte que, essentiellement, seul le rayonnement d'éclairage infrarouge peut être détecté, la première et la deuxième caméra (24, 24a, 24b, 60a, 60b) présentant en particulier respectivement une unité de filtrage pour la transmission essentiellement exclusive du rayonnement infrarouge vers le détecteur (28a-b) respectif sensible à la position.

8. Appareil de suivi laser (10, 11, 12) selon l'une des revendications 1 à 7,
**caractérisé en ce que**
l'appareil de suivi laser (10, 11, 12) présente une troisième ou plusieurs caméras (24) avec un troisième ou plusieurs détecteurs sensibles à la position pour la détection d'une troisième ou de plusieurs positions de cible, la troisième ou les plusieurs caméras (24) étant disposées de telle sorte qu'un troisième ou plusieurs axes optiques de la troisième ou des plusieurs caméras sont disposés avec un décalage par rapport à l'axe de mesure (57), et l'unité de commande et d'analyse est configurée de telle sorte que, lors de l'exécution de la fonctionnalité de recherche, la recherche de la cible (29c, 65, 81) s'effectue en fonction de trois ou plusieurs positions de cible, au moins une des caméras (24) étant en particulier constituée pour la détection du rayonnement électromagnétique dans une zone définie autour d'une longueur d'onde d'éclairage du rayonnement d'éclairage.

9. Appareil de suivi laser (10, 11, 12) selon l'une des revendications 1 à 8,
**caractérisé en ce que**
l'appareil de suivi laser (10, 11, 12) présente
• un support (30) pouvant pivoter de façon motorisée autour de l'axe vertical (41) relativement à la base (40) et définissant l'axe d'inclinaison (31), et
• une unité de visée (20) constituée en tant qu'unité de guidage de rayon, pouvant pivoter de façon motorisée autour de l'axe d'inclinaison (31) relativement au support (30), avec une unité télescopique pour l'émission du rayonnement de mesure (17, 21) et pour la réception d'au moins une partie du rayonnement de mesure (17, 21) réfléchi sur la cible (29c, 65, 81).

10. Procédé de recherche d'une cible (29c, 65, 81) avec un appareil de suivi laser (10, 11, 12),
l'appareil de suivi laser (10, 11, 12) présentant
• une base (40) définissant un axe vertical (41),
• une unité de guidage de faisceau destinée à l'émission d'un rayonnement de mesure (17, 21) et à la réception d'au moins une partie du rayonnement de mesure (17, 21) réfléchi sur la cible (29c, 65, 81),
□ l'unité de guidage de faisceau pouvant pivoter de façon motorisée autour de l'axe vertical (41) et d'un axe d'inclinaison (31) relativement à la base (40), et
□ un axe de mesure (57) étant défini par une direction d'émission du rayonnement de mesure (17, 21), et
• un détecteur (58) sensible à la position - couplé au trajet du rayon de mesure, de même que présentant un champ de vision étroit contrairement à une première et à une deuxième caméra (24, 24a, 24b, 60a, 60b) - destiné à la visée fine et au suivi de la cible (29c, 65, 81) au moyen de la détection du rayonnement de mesure (17, 21) réfléchi sur la cible (29c, 65, 81),
le procédé étant effectué avec
• un éclairage de la cible (29c, 65, 81) avec un rayonnement d'éclairage électromagnétique,
• une détection sensible à la position d'une première image avec la première caméra (24, 24a, 60a) disposée sur l'appareil de suivi laser (10, 11, 12) et définissant un premier champ de vision (27a), la première caméra (24, 24a, 60a) étant, avec son axe optique (26a), disposée de façon décalée par rapport à l'axe de mesure (57),
• une première définition d'au moins une partie du rayonnement d'éclairage réfléchi sur la cible (29c, 65, 81) en tant que première position de cible (29a) dans la première image,
• une détection sensible à la position d'une deuxième image avec la deuxième caméra (24, 24b, 60b) disposée sur l'appareil de suivi laser (10, 11, 12) et définissant un deuxième champ de vision (27a), la deuxième caméra (24, 24b, 60b)
□ étant, avec son axe optique (26b), disposée de façon décalée par rapport à l'axe de mesure (57)
□ de même qu'elle est disposée avec un positionnement et une orientation connues et fixes relativement à la première caméra (24, 24a, 60a) et à l'axe de mesure (57), et la première et la deuxième caméra (24, 24a, 24b, 60a, 60b) étant en l'occurrence disposées de telle sorte que les champs de vision (27a, 27b) de la première et de la deuxième caméra (24, 24a, 24b, 60a, 60b) se chevauchent au moins partiellement,
• une deuxième définition d'au moins une partie du rayonnement d'éclairage réfléchi sur la cible (29c, 65, 81) en tant que deuxième position de cible (29b) dans la deuxième image, et
• une localisation de la cible (29c, 65, 81) en fonction d'une conjonction de la première et de la deuxième position de cible (29a-b) avec une orientation automatique, effectuée sur cette base, du rayonnement de mesure (17, 21) vers la cible (29c, 65, 81) par la commande de l'unité de guidage de faisceau,
le positionnement et l'orientation de la première et de la deuxième caméra (24, 24a, 24b, 60a, 60b) relativement entre elles et relativement à l'axe de mesure (57) étant étalonnés par le fait que
• la cible (29c, 65, 81) est fournie dans différentes positions et visée et mesurée au moyen du rayonnement de mesure (17, 21),
• la première et la deuxième position de cible (29a-b) sont définies pour chaque position de la cible (29c, 65, 81) et,
• le positionnement et l'orientation relatifs sont dérivés à partir de la mesure de la cible (29c, 65, 81) et des positions de cible (29a-b) définies.

11. Procédé de recherche d'une cible (29c, 65, 81) avec un appareil de suivi laser (10, 11, 12),
l'appareil de suivi laser (10, 11, 12) présentant
• une base (40) définissant un axe vertical (41),
• une unité de guidage de faisceau destinée à l'émission d'un rayonnement de mesure (17, 21) et à la réception d'au moins une partie du rayonnement de mesure (17, 21) réfléchi sur la cible (29c, 65, 81),
□ l'unité de guidage de faisceau pouvant pivoter de façon motorisée autour de l'axe vertical (41) et d'un axe d'inclinaison (31) relativement à la base (40),
□ un axe de mesure (57) étant défini par une direction d'émission du rayonnement de mesure (17, 21), et
• un détecteur (58) sensible à la position - couplé au trajet du rayon de mesure, de même que présentant un champ de vision étroit contrairement à une première et à une deuxième caméra (24, 24a, 24b, 60a, 60b) - destiné à la visée fine et au suivi de la cible (29c, 65, 81) au moyen de la détection du rayonnement de mesure (17, 21) réfléchi sur la cible (29c, 65, 81),
le procédé étant effectué avec
• un éclairage de la cible (29c, 65, 81) avec un rayonnement d'éclairage électromagnétique,
• une détection sensible à la position d'une première image avec la première caméra (24, 24a, 60a) disposée sur l'appareil de suivi laser (10, 11, 12) et définissant un premier champ de vision (27a), la première caméra (24, 24a, 60a) étant, avec son axe optique (26a), disposée de façon décalée par rapport à l'axe de mesure (57),
• une première définition d'au moins une partie du rayonnement d'éclairage réfléchi sur la cible (29c, 65, 81) en tant que première position de cible (29a) dans la première image,
• une détection sensible à la position d'une deuxième image avec la deuxième caméra (24, 24b, 60b) disposée sur l'appareil de suivi laser (10, 11, 12) et définissant un deuxième champ de vision (27a), la deuxième caméra (24, 24b, 60b)
□ étant, avec son axe optique (26b), disposée de façon décalée par rapport à l'axe de mesure (57)
□ de même qu'elle est disposée avec un positionnement et une orientation connus et fixes relativement à la première caméra (24, 24a, 60a) et à l'axe de mesure (57), et la première et la deuxième caméra (24, 24a, 24b, 60a, 60b) étant en l'occurrence disposées de telle sorte que les champs de vision (27a, 27b) de la première et de la deuxième caméra (24, 24a, 24b, 60a, 60b) se chevauchent au moins partiellement,
• une deuxième définition d'au moins une partie du rayonnement d'éclairage réfléchi sur la cible (29c, 65, 81) en tant que deuxième position de cible (29b) dans la deuxième image, et
• une localisation de la cible (29c, 65, 81) en fonction d'une conjonction de la première et de la deuxième position de cible (29a-b) avec une orientation automatique effectuée sur cette base du rayonnement de mesure (17, 21) vers la cible (29c, 65, 81) par la commande de l'unité de guidage de faisceau,
la première et la deuxième position de cible (29a-b) étant définies dans la première et la deuxième image au moyen d'un traitement d'image de telle sorte que, dans l'image respective, au moyen d'une analyse de brillance et/ou de contraste, une forme de la section transversale de rayonnement du rayonnement d'éclairage réfléchi sur la cible (29c, 65, 81) et détecté dans l'image est définie et, au moyen d'un calcul du centre de gravité basé sur la forme détectée dans l'image respective, la première et la deuxième position de cible (29a-b) sont définies, lesquelles représentent respectivement l'emplacement du rayonnement d'éclairage détecté dans l'image respective.

12. Procédé selon la revendication 11,
**caractérisé en ce que**
la définition de la première et de la deuxième position de cible (29a-b) s'effectue respectivement
• au moyen d'une correspondance, en particulier d'une mise en coïncidence, de la forme détectée dans l'image respective avec un échantillon enregistré à l'aide d'un procédé best-fit, en particulier avec une précision de sous-pixel, la position de cible (29a-b) respective du rayonnement d'éclairage détecté dans l'image étant définie, en particulier avec une précision de sous-pixel, à l'aide de l'emplacement, mis en coïncidence, de l'échantillon dans l'image.

13. Procédé selon l'une des revendications 10 à 12,
**caractérisé en ce que**
des ambiguïtés qui sont présentes lors de l'utilisation de seulement la première position de cible (29a) pour la localisation de la cible (29c, 65, 81) et du fait d'une parallaxe donnée par l'axe de mesure (57) et les axes optiques (26a, 26b) de la première et de la deuxième caméra (24, 24a, 24b, 60a, 60b), sont levées par une utilisation commune aussi bien de la première que de la deuxième position de cible (29a, 29b).

14. Procédé selon l'une des revendications 10 à 13,
**caractérisé en ce que**
en fonction de la première et de la deuxième position de cible (29a-b), une distance grossière à la cible (29c, 65, 81) est définie,
respectivement une direction de cible (63a, 63b) vers la cible (29c, 65, 81) étant en particulier dérivée en fonction de la première et de la deuxième position de cible (29a-b), et une position grossière de la cible (29c, 65, 81) est définie en fonction des directions de cible (63a, 63b), en particulier au moyen de la photogrammétrie.

15. Produit de programme informatique avec code de programme qui est enregistré sur un support lisible par machine, destiné à la commande ou respectivement à l'exécution du procédé selon l'une des revendications 10 à 14.
